(19) Europäisches Patentamt
European Patent Office
Office européen des brevets

(11) EP 4 657 333 A1

(12) EUROPEAN PATENT APPLICATION

(43) Date of publication:
**03.12.2025 Bulletin 2025/49**

(21) Application number: **24382571.8**

(22) Date of filing: **29.05.2024**

(51) International Patent Classification (IPC):
***G06N 10/60*** *(2022.01)*

(52) Cooperative Patent Classification (CPC):
**G06N 10/60**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Algorithmiq Oy**
**00160 Helsinki (FI)**

(72) Inventor: **Cavalcanti, Daniel**
**08015 Barcelona (ES)**

(74) Representative: **Leinweber & Zimmermann Patentanwalts-PartG mbB**
**European Patent Attorneys**
**Viktualienmarkt 8**
**80331 München (DE)**

# (54) METHOD FOR ESTIMATING A VALUE OF AN OBSERVABLE QUANTITY OF A STATE OF A QUANTUM MANY-BODY SYSTEM, COMPUTER PROGRAM, DATA CARRIER AND COMPUTING SYSTEM

(57) The invention is related to a method for estimating a value of an observable quantity of a state of a quantum many-body system on the basis of a set of measurement data obtained from a plurality of shots of a quantum measurement of said quantum state, to a computer program for carrying out said method, to a data carrier having stored thereon the computer program and to a computing system comprising a classical computer and a quantum computer which is operative to create said measurement data and to execute said computer program.

Fig. 5

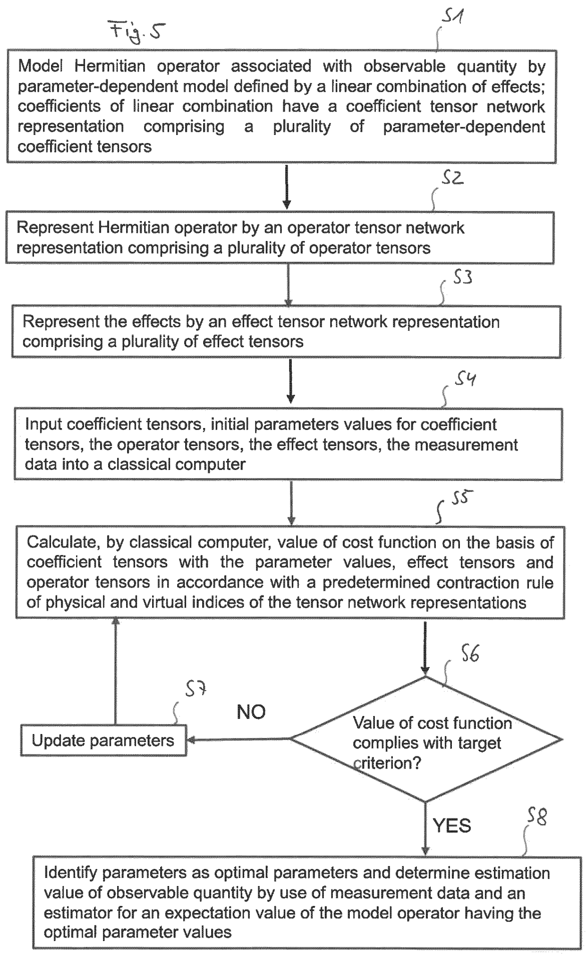


EP 4 657 333 A1

## Description

The present invention is related to a method for estimating a value of an observable quantity of a state of a quantum many-body system on the basis of a set of measurement data obtained from a plurality of shots of a quantum measurement of said quantum state, to a computer program for carrying out said method, to a data carrier having stored thereon the computer program and to a computing system comprising a classical computer and a quantum computer which is operative to create said measurement data and to execute said computer program.

Estimating the expectation value of an observable quantity of a state of a quantum many-body system is of importance in many areas of quantum technology, including applications in the field of quantum computing, and, among others, in the field of quantum chemistry. For large quantum many-body systems comprising a large number of quantum mechanical constituents, it is in general difficult to find an efficient way for estimating the expectation value. According to the laws of quantum mechanics, the expectation value of any observable quantity may be estimated by measuring a Hermitian operator associated with said observable quantity. If the eigenbasis of the operator is known, the operator may be expanded in its eigenbasis, and a measurement in said eigenbasis may lead to a reliable estimation of the expectation value. However, in practice, the implementation of the measurement in the eigenbasis may be very challenging. Furthermore, in many applications, the eigenbasis is not known.

Alternatively, one may express the operator in a measurement basis that is easy to implement in an experimental setup. For example, in the case of qubits, the Pauli basis is a natural choice for a measurement basis, and measurements in the Pauli basis may be implemented with current technologies. However, the expansion of an operator in the Pauli basis may comprise exponentially many terms which then have to be measured many times in order to obtain sufficient statistics for an estimation of the observable quantity with a high accuracy. Therefore, this approach may be impractical.

Alternatively, one may perform quantum tomography to obtain a description of the quantum state from which any observable or quantum information theoretical quantity may be estimated. However, due to the exponential growth of the underlying Hilbert space of the quantum system, the number of parameters required to describe the system generally grows exponentially with the number of constituents of the system. Therefore, the measurement cost required to reach a certain precision as well as the memory costs to store the measurement data may become unattainable even for small system sizes.

Recently, an efficient way to estimate an expectation value of an observable quantity of a quantum system without the need to reconstruct the full quantum state has been developed. The idea is to measure the quantum state with an Informationally Complete (IC) Positive Operator Valued Measure (POVM) and to classically postprocess the data using the dual effects (sometimes simply called "duals") of the POVM. One key problem here is to find an efficient way to calculate the dual effects which are generally not known. In G. M. D'Ariano and P. Perinotti, "Optimal data processing for quantum measurements", Physical Review Letters 98, 020403 (2007), a way to calculate the dual effects via an inverse of a so-called frame operator is proposed. The dual effects calculated in this way are called canonical duals. While this approach works in theory for any IC POVM, it is impractical for larger system sizes as it requires calculating the inverse of a map which scales exponentially with the system size. Furthermore, due to the finite statistics available in the experiment, the canonical duals may not be the best choice to estimate the value of the observable quantity of interest to a high accuracy.

To overcome this problem, arXiv:2401.18049, "Enhanced observable estimation through classical optimization of informationally over-complete measurement data -- beyond classical shadows" by J. Malmi et.al and arXiv:2401.18071v1, "Dual frame optimization for informationally complete quantum measurements" by L. Fischer et.al propose ways to find alternative sets of dual effects which result in a higher accuracy for the estimation of the value of the observable quantity of interest compared to the canonical duals. However, these approaches are either limited to small system sizes or restricted to measurements having effects with a special structure.

Due to these problems in the prior art, it is therefore an object of the present invention to provide a method for estimating a value of an observable quantity of a state of a quantum many-body system on the basis of a set of measurement data which is efficient, applicable to large systems comprising many quantum-mechanical constituents and has a high accuracy.

According to a first aspect of the present invention, this problem is solved by a method for estimating a value of an observable quantity of a state of a quantum many-body system on the basis of a set of measurement data obtained from a plurality of shots of a quantum measurement of said quantum state, said quantum measurement being described by an informationally complete Positive Operator Valued Measure with a plurality of effects, each effect being associated with a measurement outcome, said set of measurement data being representative of the measurement outcomes of said quantum measurement, said method comprising:

(i) modelling a Hermitian operator associated with said observable quantity by a parameter-dependent model, said model being defined by a linear combination of said effects, wherein the coefficients of said linear combination have a coefficient tensor network representation comprising a plurality of parameter-dependent coefficient tensors;

(ii) representing the Hermitian operator by an operator tensor network representation comprising a plurality of

operator tensors;

(iii) representing the effects by an effect tensor network representation comprising a plurality of effect tensors;

(iv) determining, by a classical computer, optimal values for the parameters of the coefficient tensors such that a value of a cost function which comprises a term proportional to a penalty function representative of a distance between the operator and the model operator complies with a predetermined target criterion, wherein the classical computer calculates the value of the cost function on the basis of the coefficient tensors, the effect tensors and the operator tensors in accordance with a predetermined contraction rule of physical and virtual indices of the tensor network representations;

(v) determining, by the classical computer, the estimation value of the observable quantity by calculating an estimator value for an expectation value of the model operator having the optimal parameter values given the measurement data.

Terminology used throughout the present specification is also in line with standard terminology as for instance used in S. Ran et al, "Tensor Network Contractions", Lecture Notes in Physics 964 (2000) and M. Nielsen, I. Chuang, "Quantum Computation and Quantum Information", Cambridge University Press (2010).

The application was originally filed in color, and any reference to color in the present copy relates to the colors as originally filed.

The method according to the present invention provides an efficient way for estimating the value of the observable quantity for the quantum state of the quantum many-body system. This is due to the use of the tensor network representations which allow to determine efficiently the optimal parameter values for the model by the classical computer. Therefore, the estimator value for the expectation value of the observable quantity may be calculated efficiently. In particular, the value of the cost function may be calculated efficiently on the basis of the coefficient tensors, the effect tensors and the operator tensors according to the predetermined contraction rule of physical and virtual indices. It is well-known in the art that tensor network representations allow for calculations related to quantum mechanical problems on a classical computer that may otherwise be intractable due to the exponential growth of the underlying Hilbert space. The method according to the present invention is applicable to large quantum many-body systems comprising many quantum-mechanical constituents for which estimating the value of the observable quantity has not been possible with high accuracy in the past. The method is different from the methods known in the art which rely on a calculation of the dual effects. In contrast, in the method of the present invention the coefficients of the parameter-dependent model operator are calculated directly. The method according to the present invention works independently of the form of the effects and is thereby universal.

The measurement data is created by the plurality of shots of the quantum measurement of the quantum state. The quantum system is a physical system and may be part of a quantum hardware, e.g., a quantum computer or other setup. The quantum measurement is a physical operation applied to the quantum state of the quantum system and may be implemented by the quantum hardware. In one example, each shot of the quantum measurement may be implemented by use of state preparation means operative to prepare the quantum state and by use of measurement means operative to apply said quantum measurement to said quantum state. The state preparation means and the measurement means may be part of the quantum hardware.

The method according to the present invention is a method for classical post-processing measurement data obtained from a quantum measurement described by an Informationally Complete Positive Operator Valued Measure by the classical computer which may provide low-variance, unbiased observable estimators. The method according to the present invention requires, among others:

1. measurement data obtained from an implementation of an IC POVM;

2. a classically efficient representation of the observable to be estimated given in terms of a tensor network;

3. a classically efficient representation of the implemented measurement given in terms of a tensor network;

Here, "classical efficient" may mean that the number of parameters of the tensor network representation scales sub-exponential, and preferably polynomial, in the size of the quantum system.

Point 1 may be satisfied in principle by all quantum hardware. Point 2 is true for basically all cases of interest, such as typical chemical Hamiltonians. Point 3 may be enforced by an appropriate choice of the quantum measurement.

The main advantages of the method according to the present invention with respect to other existing methods include the following:

i. The method according to the present invention may allow for the estimation of many observables from the same measurement data.

ii. The method according to the present invention is efficient and scalable, i.e. one may apply it to large systems, for example, hundreds of qubits.

iii. The method according to the present invention may provide estimations with very low statistical error, which means less measurement overhead to achieve a given precision.

While there are other methods in the art that may provide estimates for many observables, such as shadow estimation, these methods are either limited in efficiency (i.e. they can't be applied to large systems), can't be implemented in real hardware (so, they are of theoretical interest only), or are limited in terms of statistical error that can be achieved. To the inventor's knowledge, the method according to the present invention is the only method that can be implemented in current hardware that can be scaled and provide low statistical error at the same time. Within this specification, "scalable" means one may apply the method to many quantum mechanical constituents, like qubits. This is the case because the method uses an efficient classical representation given by tensor networks.

The quantum many-body system may be any quantum system comprising a plurality of constituents. For example, the system may be or may comprise a number n of quantum mechanical d-level systems as constituents, for example qubits (d=2), qutrits (d=3), etc. An observable quantity is any quantity that may be measured in an experiment. Every observable quantity is associated with a hermitian operator. An example of an observable quantity is the energy, and the associated hermitian operator is a Hamiltonian. Throughout this specification, the Hermitian operator associated with the observable quantity is denoted as (Hermitian) operator O.

A classical computer is a computer performing calculations on the basis of classical bits. The classical computer may be any classical computer known in the art. In particular, the classical computer may comprise a classical processor and a classical memory. The classical processor may comprise a microprocessor or a multiprocessor in one example. The classical memory may comprise a volatile and/or a non-volatile memory in one example. The classical computer may further comprise an input/output unit, a basic input-output system (BIOS), a bus system, etc., but it is not limited to this.

The informationally complete POVM of the quantum measurement is described by the plurality of r effects $\Pi_k$, k=1, ..., r, which are positive operators $\Pi_k \geq 0$ summing up to the identity operator,

$$\sum_{k=1}^{r} \Pi_k = \mathbb{1},$$

and spanning the operator space associated with the quantum system. The effect $\Pi_k$ is associated with a measurement outcome $m_k$. When the POVM is measured on the quantum state described by a density operator $\rho$, the probability to obtain the measurement outcome $m_k$ is given by $\mathrm{Tr}[\rho\Pi_k]$. Any operator Q acting on the quantum system may be expressed as a linear combination of the effects according to $Q = \sum_{k=1}^{r} q_k \Pi_k$ with coefficients $q_k$. Any POVM may be realized by, e.g., by a unitary operation acting on the quantum system and an ancillary system followed by a projective measurement on the joint Hilbert space of said quantum system and ancillary system (This is known as Naimark's dilation theorem).

Each shot s of the plurality of S shots may comprise preparing the quantum state and applying the quantum measurement described by the IC POVM resulting in a measurement outcome $m_{k_s}$. In one example, the set of measurement data may comprise for each shot s the associated measurement outcome $m_{k_s}$. In another example, the set of measurement data may comprise each distinct measurement outcome $m_{k_s}$ of the measurement together with its associated frequency $f_k$, that is the relative number of times it appears in the measurement (i.e., the frequencies for all measurement outcomes sum up to one).

The Hermitian operator is modelled by the parameter-dependent model (operator) $O_\omega = \sum_{k=1}^{r} \omega_k \Pi_k$ defined by a linear combination of the effects. Here, $\omega_k$ are the coefficients of the linear combination. The coefficients have the coefficient tensor network representation comprising the plurality of parameter-dependent coefficient tensors. The coefficients may be scalars.

A tensor may be understood as a series of numbers labeled by N indices with N called the order of the tensor. In this language, a scalar is a tensor of order zero. A vector with k components is a first-order tensor, and a matrix is a second order tensor.

A tensor network representation of a vector, a tensor, an operator, a map, etc. may comprise a plurality of tensors and a contraction rule for theses tensors. The contraction rule specifies which indices of which tensors are contracted in which order. For example, any N-qudit operator Q may be represented as $Q = \sum_{i_0,\dots,i_{N-1},j_0,\dots,j_{N-1}=0}^{N-1} q_{i_0,\dots,i_{N-1}}^{j_0,\dots,j_{N-1}} |i_0, \dots, i_{N-1}\rangle\langle j_0, \dots, j_{N-1}|$, wherein $|i_0, \dots, i_{N-1}\rangle$ is a basis state for the Hilbert space of the N qudits and $|i_0, \dots, i_{N-1}\rangle\langle j_0, \dots, j_{N-1}|$ is a basis state for the space of operators associated with the Hilbert space

of the N qudits. Then, the coefficients $q_{i_0,\ldots,i_{N-1}}^{j_0,\ldots,j_{N-1}}$ may be represented by a tensor network, e.g., according to $q_{i_0,\ldots,i_{N-1}}^{j_0,\ldots,j_{N-1}} \approx \sum_{v_0,\ldots,v_{N-1}=0}^{\chi-1} A_{i_0,j_0,v_0}^{[0]} A_{i_1,j_1,v_0,v_1}^{[1]} A_{i_2,j_2,v_1,v_2}^{[2]} \ldots A_{i_{N-2},j_{N-2},v_{N-2},v_{N-1}}^{[N-2]} A_{i_{N-1},j_{N-1},v_{N-1}}^{[N-1]}$. The objects $A_{i_k,j_k,v_{k-1},v_k}^{[k]}$, $A_{i_p,j_p,v_p}^{[p]}$ are tensors. The tensor $A^{[k]}$ is associated with the k-th qudit. The indices $i_k, j_k$ are called physical indices, the indices $v_k$ are called virtual indices. $\chi$ is called the bond dimension. The larger the bond dimension, the smaller the error in representing the coefficients by their tensor network representation. As stated above, the tensor network representation may comprise the tensors ( $A_{i_k,j_k,v_{k-1},v_k}^{[k]}$, $A_{i_p,j_p,v_p}^{[p]}$ in the example) and the contraction rule, i.e., a rule how summation over the indices is carried out. In the example above where the coefficients $q_{i_0,\ldots,i_{N-1}}^{j_0,\ldots,j_{N-1}}$ are represented by the tensors, the virtual indices are contracted. It is known in the art that tensor network representations of operators, maps, tensors, etc., are useful for performing efficient calculations with these quantities. This may include the contraction of physical and/or virtual indices.

The coefficient tensor network representation comprises the plurality of parameter-dependent coefficient tensors.. As the coefficients $\omega_k$ are represented by the coefficient tensor network representation, they depend on the parameters The set of parameters is denoted by $\{\mu_j\}_j$ within this specification. To emphasize this parameter-dependency, the notation $\omega_k(\{\mu_j\}_j)$ may be used interchangeably with the notation $\omega_k$ for the coefficients throughout this specification. The effect tensor network representation comprises the plurality of effect tensors. The operator tensor network representation comprises the plurality of operator tensors.

As it is well-known in the art, tensor network representations allow to efficiently represent, store and manipulate the underlying objects they represent. Going back to the example above of the N-qudit operator Q, there are $d^{2N}$ coefficients $q_{i_0,\ldots,i_{N-1}}^{j_0,\ldots,j_{N-1}}$ for representing the operator Q in the chosen basis. However, a tensor network representation of the coefficients $q_{i_0,\ldots,i_{N-1}}^{j_0,\ldots,j_{N-1}}$ requires only $O(Nd^2\chi)$ parameters and is thus linear in the system size.

In one example, the coefficient tensor network representation may comprise a tensor network representation for each coefficient $\omega_r$. In another example, one my form a coefficient vector $\omega = [\omega_1, \ldots \omega_r]$, and the coefficient tensor network representation may represent the coefficient vector. The parameters of the coefficient tensor network representation may be real parameters in one example, but the invention is not limited to this.

The operator tensor network representation and the effect tensor network representation may be with respect to a basis of a vector space or an operator space associated with the quantum system. In an expedient example, the operator tensor network representation and the effect tensor network representation may be with respect to the same basis. If an operator basis associated with the quantum system has basis operators $\sigma^\alpha$, the operator O may be represented as $O = \Sigma_\alpha o_\alpha \sigma^\alpha$ with expansion coefficients $o_\alpha$ in one example. Then, the operator tensor network representation may represent the expansion coefficients $o_\alpha$ in the example. Similarly, each effect may be represented as a linear combination of the basis operators, $\Pi_k = \Sigma_\alpha \pi_{k,\alpha} \sigma^\alpha$ with expansion coefficients $\pi_{k,\alpha}$ in one example. Then, the effect tensor network representation may comprise for each of the r effects an effect tensor network representation representing the expansion coefficients $\pi_{k,\alpha}$ in the example.

In another example, the Hermitian operator O may be vectorized, the vectorized representation of the Hermitian operator O being denoted by $|O\rangle\rangle$. In this example, the operator tensor network representation may represent the vectorized operator $|O\rangle\rangle$. In another example, one may vectorize each effect and construct an effect matrix $\hat{\Pi}$ by stacking together the vectorized effects as $\hat{\Pi} = [|\Pi_1\rangle\rangle, \ldots, |\Pi_r\rangle\rangle]$. In this example, the effect tensor network representation may represent the effect matrix $\hat{\Pi}$.

The method according to the present invention comprises representing the Hermitian operator by the operator tensor network representation and representing the effects by the effect tensor network representation. The tensors of the coefficient, operator and effect tensor network representations have a certain bond dimension. Preferably, the bond dimension is large enough to represent the respective quantity to a desired accuracy but small enough so that an efficient calculation of the value of the cost function is possible. In one example, the bond dimension may be the same for all tensors of the coefficient, operator and effect tensor network representations, but the invention is not limited to this.

In one example, representing the Hermitian operator and/or the effects by the operator and effect tensor representations, respectively, may be assisted by the classical computer. For example, a desired maximum bond dimension and a representation of the Hermitian operator and/or the effects with respect to some basis may be provided

to the classical computer as an input, and the classical computer may derive a tensor network representation in accordance with said input. In one further example, the user may also select a desired type of tensor network representation (e.g., Matrix Product State, Matrix Product Operator, Tree Tensor Network, etc.) and provide this as an input to the classical computer, and the classical computer may derive a tensor network representation of said type. Algorithms for obtaining a tensor network representation of a given quantity, like a matrix or a tensor, are known in the art, see e.g., S. Ran et al, "Tensor Network Contractions", Lecture Notes in Physics 964, Chapter 2.2 cited above.

When the tensor network representation of the Hermitian operator and/or the effects is derived by the classical computer, the method may comprise providing a representation of the Hermitian operator and/or the effects to the classical computer and receiving said representations at the classical computer. However, the invention is not limited to this, and the tensor network representations of the operator and/or the effects may otherwise be derived, e.g., by a user of the method based on well-known physical considerations, or they may be known in the art. Then, the method may comprise providing the tensor network representation of the operators and/or effect to the classical computer and receiving said operators and/or effect tensor network representations at the classical computer.

Similarly, the coefficient tensor network representation may be derived by the classical computer in one example, e.g., given a desired bond dimension and a desired parametrization of the coefficient tensors. However, the invention is not limited to this, and the coefficient tensor network representations may otherwise be derived, e.g., by a user of the method based on well-known physical considerations. Then, the method may comprise providing the coefficient tensor network representation to the classical computer and receiving said coefficient tensor representation at the classical computer.

According to the method of the present invention, the classical computer calculates the value of the cost function which comprises the term proportional to the penalty function representative of the distance between the operator O and the model operator $O_\omega$. Within this specification, we denote the penalty function by $g(O, O_\omega)$. Recall that the model operator $O_\omega$ is a linear combination of the effects $\Pi_k$ with the coefficients $\omega_k$. Thus, one may understand that the value of the cost function may be calculated on the basis of the coefficient tensors, the effect tensors and the operator tensors in accordance with a predetermined contraction rule of physical and virtual indices of the tensor network representations. Algorithms for contracting tensor networks are known in the art. They allow to perform calculations efficiently provided that the bond dimension $\chi$ is appropriately chosen. The cost function and/or the penalty function may be real-valued functions in one example.

The target criterion may be such that tensor network representation of the model operator $O_\omega = \sum_{k=1}^{r} \omega_k \Pi_k$ is a reliable approximation of the tensor network representation of the operator O to a desired accuracy.

Given the model operator $O_\omega = \sum_{k=1}^{r} \omega_k \Pi_k$, there is an estimator of an expectation value of said model operator given the measurement data. Preferably, the estimator is an unbiased estimator. In one example, the estimator is of the form $E(O_\omega) = \frac{1}{S}\sum_{s=1}^{S}\sum_{k=1}^{r} \omega_k(\{\mu_j\}_j)\delta_{m_k,m_{k_s}}$, wherein $\delta_{m_k,m_{k_s}}$ = 1 if $m_k = m_{k_s}$ (recall that $m_{k_s}$ is the measurement outcome of shot s) and $\delta_{m_k,m_{k_s}}$ = 0 if $m_k \neq m_{k_s}$. In one example where the set of measurement data comprises each distinct measurement outcome $m_{k_s}$ of the quantum measurement together with its associated frequency $f_k$, the estimator may be simplified to $E(O_\omega) = \sum_{k=1}^{r} f_k \omega_k(\{\mu_j\}_j)$. Once the optimal values $\{\mu_j^*\}_j$ for the parameters $\{\mu_j\}_j$ are obtained, the value of the observable quantity may be estimated as the value of the estimator for the optimal parameter values and given the measurement data. I.e., the value of the observable quantity may be estimated as $E(O_\omega) = \frac{1}{S}\sum_{s=1}^{S}\sum_{k=1}^{r} \omega_k(\{\mu_j^*\}_j)\delta_{m_k,m_{k_s}}$ or as $E(O_\omega) = \sum_{k=1}^{r} f_k \omega_k(\{\mu_j^*\}_j)$ in one example.

The method according to the present invention works for any informationally complete POVM. The form of the POVM is determined by the quantum measurement. I.e., it may be determined by the quantum hardware used to obtain the measurement data. In particular, the method works for a minimal IC POVM for which the effects are linearly independent. Any informationally complete POVM which is not a minimal POVM is called an informationally overcomplete POVM. The effects of an informationally overcomplete POVM are linearly dependent. Thus, there is an intrinsic degree of freedom in the choice of the effects used for the representation of any operator. Thus, in case that the cost function comprises only the term proportional to the penalty function, there may be no unique solution for the optimal parameters, and there may be indeed a plurality of solutions. In this case, one may select one of these solutions in accordance with some desired criterion. Thus, according to another embodiment of the method of the present invention, said informationally complete Positive Operator Valued Measure may be informationally overcomplete, and said cost function may be a penalty-regularized cost function comprising the term proportional to the penalty function and a further term proportional to a

measure of statistical dispersion of the estimator. The measure of statistical dispersion may be denoted by $D(E(O_\omega))$ throughout this specification.

In this embodiment, the coefficients $\omega_k$ are determined by classical post-processing on the classical computer such that the penalty-regularized cost function fulfills the target criterion. In certain examples, this may be understood as the solution to a constrained optimization problem wherein the measure of statistical dispersion is to be optimized (for example, minimized) while fulfilling the constraint of the penalty function, that is that the distance between the operator O (represented by the operator tensor representation) and the model operator $O_\omega$ (represented by the coefficient and effect tensor network representations) is small. This implies that the model operator $O_\omega$ is a good approximation for the operator O. Preferably, the cost function L is a linear combination of the measure of dispersion and the penalty function, that is, $L = c_1D(E(O_\omega)) + c_2g(O, O_\omega)$, with real, preferably positive coefficients $c_1$ and $c_2$. In one expedient embodiment, the penalty function may have the form $L = (1 - \lambda)D(E(O_\omega)) + \lambda g(O, O_\omega)$ with a positive coefficient λ called the penalty coefficient. The coefficients $c_1$, $c_2$, respectively the penalty coefficient λ, may be selected in accordance with the quantum system, the operator O and the measurement data, e.g., by a user of the method.

In one example, the measure of statistical dispersion may be calculated on the basis of the measurement data, and the coefficient tensors and the effect tensors in accordance with a predetermined contraction rule of virtual and physical indices of the coefficient and effect tensor network representations. This may allow for an efficient calculation of the measure of statistical dispersion by the classical computer.

The measure of statistical dispersion is a measure for the accuracy of the value of the estimator. Preferably, the optimal parameter values are determined such that the value of the measure of statistical dispersion is small, in particular smaller than a predetermined threshold value.

While the method according to the present invention may be applied given only the set of measurement data, the method according to the present invention may also comprise creating said measurement data. Thus, according to another embodiment of the method of the present invention, said method may further comprise: providing the quantum many-body system; providing state preparation means operative to prepare the quantum state of the quantum many-body system; providing measurement means operative to apply said quantum measurement to said quantum state; implementing the plurality of shots of the quantum measurement of said quantum state, wherein each shot comprises operating said state preparation means to thereby prepare said quantum state followed by operating said measurement means to thereby obtain one of the measurement outcomes. In one example, the quantum state may be prepared by application of the Variational Quantum Eigensolver (VQE), but the invention is not limited to this.

The quantum many-body system, the state preparation means and the measurement means may be part of a quantum hardware, e.g., a quantum computer in one example. The quantum hardware/quantum computer and the classical computer may be located at the same location in one example. In another example, the quantum hardware/quantum computer and the classical computer may be remote from each other. In yet another example, the quantum hardware/quantum computer and/or the classical computer may be a cloud computer.

In another embodiment of the method according to the present invention, said quantum system may comprise a plurality of quantum mechanical d-level systems, d≥2, and wherein each effect may be such that it is representable as a tensor product of operators each of which is acting on only one quantum mechanical d-level systems. This may be understood as a property of the quantum hardware/quantum computer. If we denote by n the number of quantum mechanical d-level systems, each effect $\Pi_k$ of the POVM is given by $\Pi_k = \bigotimes_{j=1}^{n} \Pi_{m_j}^{(k,j)}$, wherein the effect $\Pi_{m_j}^{(k,j)}$ acts only on the j-th d-level system. Preferably, d = 2, that is, the quantum mechanical d-level systems are qubits, but the invention is not limited to this. Such POVM effects have an efficient tensor network representation with low bond dimension. Furthermore, such effects may be realized in current experiments and may even be native to certain measurement setups.

In another example where the quantum system comprises the n≥2 quantum mechanical d-level systems, the effects may be K-producible, $K \geq 1$. I. e., each effect is a tensor product of operators each of which is acting on at most K quantum mechanical d-level systems. I. e., $\Pi_m = \Pi_m^{(1)} \otimes \Pi_m^{(2)} \otimes \ldots \otimes \Pi_m^{(j)}$, wherein $\Pi_m^{(i)}$ acts on at most K quantum mechanical d-level systems (see, e. g., S. Szalay "k-stretchability of entanglement, and the duality of K-separability and K-producibility", Quantum 3, 204 (2019) for an analogous definition of K-producibility for quantum states). The case K=1 is covered by the above embodiment.

The target criterion may be selected by the user of the method. In one embodiment of the method according to the present invention, said target criterion may comprise a minimization or a maximization criterion. The target criterion may be understood as a feature of the classical post-processing by the classical computer. For example, the minimization criterion may be fulfilled when the value of the cost function is minimal. In another example, the minimization or the maximization criterion may be fulfilled when the value of the cost function L is below or above a predetermined target value. In another example, the minimization or the maximization criterion may be fulfilled when a change in the cost function is below a pre-determined threshold value.

In one embodiment, determining said optimal values of the parameters may comprise an application of an optimization routine. An example of such an optimization routine is given below. The application of the optimization routine may be understood as a property of the classical post-processing of the measurement data by the classical computer. In particular, the embodiment may comprise providing a set of initial parameter values $\{\mu_j^{init}\}_j$ for the parameters of the coefficient tensors to the classical computer. In one example, the initial parameter values may be sampled randomly in accordance with a predetermined probability distribution. In each step of the optimization routine the input parameters of the step may be updated, in particular on the basis of the value of the cost function for said input parameters, and the updated parameters may be used as the input parameters for the next step of the optimization routine.

As explained above, the operator tensor network representation and the effect tensor network representation may be with respect to a basis of a vector space or an operator space associated with said quantum many-body system. In principle, this basis may be arbitrary. However, in one expedient example wherein the quantum system comprises the n quantum mechanical d-level systems, the basis for the vector space or operator space may be selected, e.g., by the user of the method, such that each basis vector (operator) is a tensor product of local basis vectors (operators) each being associated to only one of the quantum mechanical d-level system. This may allow for an efficient tensor network representation of the Hermitian operator and the effects. In particular, for local operators and local effects, the tensor network representation is efficient, that is, there is a good approximation with a small bond dimension. Selecting the basis may be understood as a part of the classical post-processing of the measurement data.

In one expedient embodiment of the method according to the present invention, the coefficient tensor network representation and/or the operator tensor network representation and/or the effect tensor network representation may be a Matrix Product representation. Preferably, all tensor network representations used in the method according to the present invention are Matrix Product representations. The Matrix Product representation may be a Matrix Product State representation in one example. In another example it may be a Matrix Product Operator representation. However, the invention is not limited to this. The tensor network representations being Matrix Product representations is a property of the classical post-processing of the measurement data by the classical computer.

In one example, where the coefficient tensor network representation represents the coefficient vector $\omega = [\omega_1, \ldots \omega_r]$, said tensor network representation may be a Matrix Product State representation. In one example where the operator tensor network representation represents the vectorized operator O, $|O\rangle\rangle$, the operator tensor network representation may be a Matrix Product State representation. In a further embodiment where the effect tensor network representation represents the effect matrix $\hat{\Pi}$, the effect tensor network representation may be a Matrix Product Operator representation.

In one expedient embodiment of the method according to the present invention, determining the optimal value of the parameters may comprise an iterative routine wherein each iteration comprises selecting a subset of the coefficient tensors and updating only the parameters associated with the selected tensors. This may be a particularly efficient way of calculating the value for the cost function L which may be applicable efficiently to large system sizes. In one example, only a single coefficient tensor may be selected in each iteration step, but the invention is not limited to this. This embodiment may be particularly useful for when all tensor network representations are Matrix Product representations. The iterative routine may be understood as a part of the classical post-processing of the measurement data by the classical computer. In one example, the embodiment may comprise providing a set of initial parameter values $\{\mu_j^{init}\}_j$ for the parameters of the coefficient tensors to the classical computer. In one example, the initial parameter values may be sampled randomly in accordance with a predetermined probability distribution. In each step of the iteration, the input parameters of the step may be updated, in particular on the basis of the value of the cost function for said input parameters, and the updated parameters may be used as the input parameters for the next step of the iteration.

The measure of statistical dispersion is not limited in the present application. In one embodiment of the present invention, the measure of statistical dispersion may comprise a second moment of the estimator. In one example, the measure of statistical dispersion may comprise or may be the second moment (also called variance) of the estimator. The form of the measure of dispersion may be understood as a property of the classical post-processing of the measurement data by the classical computer.

The penalty function is representative of a distance between the operator O and the model operator $O_\omega$ and therefore an indicator of the quality of the approximation of the operator O by the model operator $O_\omega$. The penalty function may be a real-valued function in one example. In one embodiment of the method of the present invention, the penalty function may comprise a function of an operator norm of a difference between the operator and the model operator I.e., $g(O, O_\omega) = g(\|O - O_\omega\|)$ wherein $\|\cdot\|$ denotes the operator norm. In one example, $g(O, O_\omega) = \|O - O_\omega\|$. In one example, the value of the penalty function may be calculated on the basis of the coefficient tensors, the effect tensors and the operator tensors in accordance with a predetermined contraction rule of physical and virtual indices of the tensor network representations. The form of the penalty function may be understood as a property of the classical post-processing of the measurement data

by the classical computer.

According to a second embodiment of the present invention, there is provided a computer program for estimating a value of an observable quantity of a state of a quantum many-body system on the basis of a set of measurement data obtained from a plurality of measurement shots of a quantum measurement of said quantum state, said quantum measurement being described by an informationally complete Positive Operator Valued Measure with a plurality of effects, each effect being associated with a measurement outcome, said set of measurement data being representative of the measurement outcomes of said quantum measurement, wherein said computer program comprises instructions, which, when the computer program is executed by a classical computer, cause the classical computer to carry out the following steps:

- receiving said set of measurement data, a representation of a Hermitian operator which is associated with the observable quantity and a representation of the effects as an input;
- determining optimal values for parameters of a plurality of parameter-dependent coefficient tensors of a coefficient tensor network representation of coefficients of a parameter-dependent model of said Hermitian operator, said model being defined by a linear combination of the effects with said coefficients, such that a value of a cost function which comprises a term proportional to a penalty function representative of a distance between the Hermitian operator and the model operator complies with a predetermined target criterion, wherein the value of the cost function is calculated on the basis of the coefficient tensors, a plurality of effect tensors of an effect tensor network representation of the effects and a plurality of operator tensors of an operator tensor network representation of the Hermitian operator in accordance with a predetermined contraction rule of physical and virtual indices of the tensor network representations;
- determining, by the classical computer, the estimation value of the observable quantity by calculating an estimator value for an expectation value of the model operator having the optimal parameter values given the measurement data.

The computer program according to the second aspect of the present invention may be used for implementing the method according to the first aspect of the present invention. Everything said above in relation to the method according to the first aspect of the present invention also holds for the computer program according to the second aspect of the present invention.

According to a third aspect of the present invention, there is provided a data carrier having stored thereon the computer program according to the second aspect of the present invention. In particular, the data carrier may be a non-transitory data carrier in one example.

According to a fourth aspect of the present invention, there is provided a computing system comprising a classical computer and a quantum computer, said quantum computer comprising a quantum many-body system, state preparation means operative to prepare a quantum state of the quantum system, measurement means operative to apply a quantum measurement to said quantum state, said quantum measurement being described by an informationally complete Positive Operator Valued Measure with a plurality of effects, each effect being associated with a measurement outcome, said quantum computer being operative to implement a plurality of shots of the quantum measurement by repeatedly operating said state preparation means to thereby prepare said quantum state followed by operating said measurement means to thereby obtain a measurement outcome, said classical computer being operative to receive a set of measurement data representative of the measurement outcomes, and to execute the computer program according to the third aspect of the present invention.

Everything that was said above in relation to the method according to the first aspect of the present invention and the computer program according to the second aspect of the present invention also applies to the computing system according to the fourth aspect of the present invention.

In the following, the invention will be described in greater detail by way of example with reference to the drawings:

Fig. 1 is a presentation of numerical results obtained in an embodiment of the method according to the present invention;

Fig. 2 is a presentation of numerical results obtained in another embodiment of the method according to the present invention;

Fig. 3 is a presentation of numerical results obtained in yet another embodiment of the method according to the present invention;

Fig. 4 is a schematic representation of an embodiment of the computing system comprising a quantum computer and a classical computer according to the fourth aspect of the present invention;

Fig. 5 is a flow chart of an embodiment of the method according to the first aspect of the present invention;

Fig. 4 is a schematic representation of a computing system 1 comprising a quantum computer 10 and a classical computer 100 according to the fourth aspect of the present invention. The quantum computer 10 comprises a quantum system 11 which, in the present embodiment, is a quantum system comprising a plurality of n qubits. The quantum computer 10 further comprises state preparation means 12 operative to prepare a quantum state of interest. In one example, the quantum state of interest may be a ground state of a quantum chemical Hamiltonian. The quantum computer 10 further comprises measurement means 13 operative to apply a quantum measurement to said quantum state. The quantum measurement is described by an Informationally Complete Positive Operator Valued Measure. In one example, the IC POVM is informationally overcomplete. In the example the POVM is defined by the effects $\Pi_k = \bigotimes_{j=1}^{n} \Pi_{m_j}^{(k,j)}$, wherein the effect $\Pi_{m_j}^{(k,j)}$ acts only on the j-th qubit. Each effect $\Pi_k$ is associated with a measurement outcome $m_k$.

The quantum computer 10 is operative to implement a plurality of S shots of the quantum measurement. In each shot, the state preparation means 12 is operated to prepare the quantum system 11 in the desired quantum state and the measurement means 13 is operated to apply the quantum measurement to said quantum state. The measurement outcome of the shot s is denoted by $m_{k_s}$. After S shots, a set of measurement data, $(m_{k_1}, \ldots, m_S)$ is obtained. The quantum computer 10 is configured to output the set of measurement data.

The set of measurement data is provided to the classical computer 100. The classical computer 100 comprises an Input/Output Unit 103 for receiving the set of measurement data as an input. The classical computer 100 further comprises a classical memory 102 for storing a computer program, and a CPU 101 configured to execute the computer program. The result of the execution of the computer program is output by the Input/Output Unit 103.

The computing system 1 may be used to implement the method according to an embodiment of the first aspect of the present invention shown in Fig. 5. To be more precise, Fig. 5 is a flowchart of the embodiment of the method according to the first aspect of the present invention.

The Method according to the first aspect of the present invention is a method for estimating a value of an observable quantity of the state of a quantum many-body system, e.g., the quantum system 11 of the computing system shown in Fig. 4, on the basis of the set of measurement data obtained from the plurality of shots of the quantum measurement of said quantum state.

The method starts at step S1 with modelling a Hermitian operator associated with said observable quantity by a parameter-dependent model. The model is defined by a linear combination of the effects of the quantum measurement, $O_\omega = \sum_{k=1}^{r} \omega_k \Pi_k$. The coefficients $\omega_k$ of said linear combination have a coefficient tensor network representation comprising a plurality of parameter-dependent coefficient tensors. The set of parameters is denoted by $\{\mu_j\}_j$.

The method proceeds with steps S2, where the Hermitian operator is represented by an operator tensor network representation comprising a plurality of operator tensors, and with step S3, where the effects are represented by an effect tensor network representation comprising a plurality of effect tensors

The order of steps S1, S2 and S3 may be interchanged.

At step S4, a representation of the plurality of parameter-dependent coefficient tensors, initial parameter values for said parameters, a representation of the plurality of operator tensors, a representation of the plurality of effect tensors and the measurement data obtained from the plurality of shots of the quantum measurement is provided as an input to the classical computer 100. Alternatively, some representation of the Hermitian operator and the effects may be provided to the classical computer and the tensor network representations may be obtained by the classical computer.

At step S5, the classical computer, calculates the value of a cost function on the basis of the coefficient tensors given the values of the parameters, the effect tensors and the operator tensors in accordance with a predetermined contraction rule of physical and virtual indices of the tensor network representations. In one example, the cost function is of the form $L = (1 - \lambda)D(E(O_\omega)) + \lambda g(O, O_\omega)$ with a positive coefficient $\lambda$ called the penalty coefficient. Here, $D(E(O_\omega))$ is a measure of statistical dispersion of the model operator $O_\omega = \sum_{k=1}^{r} \omega_k \Pi_k$ and $g(O, O_\omega) = \|O - O_\omega\|$ wherein $\|\cdot\|$ denotes an operator norm.

If the value of the cost function L does not comply with a predetermined target criterion (NO at step S6), the method proceeds to step S7 where the parameters of the coefficient tensors are updated. The method then returns to step S5, where the value of the cost function is calculated given the updated parameter values. Ways how to update the parameters are presented below.

If the value of the cost function L complies with the predetermined target criterion, the method proceeds to step

S8. The current values of the parameters are identified as the optimal parameters $\{\mu_j^*\}_j$ The estimation value of the observable quantity is calculated by use of the measurement data and an estimator for an expectation value of the model operator having the optimal parameter values. In one example, the estimator is of the form $E(O_\omega)$ = $\frac{1}{S}\sum_{s=1}^{S}\sum_{k=1}^{r}\omega_k(\{\mu_j^*\}_j)\delta_{m_k,m_{k_s}}$, wherein $\delta_{m_k,m_{k_s}} = 1$ if $m_k = m_{k_s}$ (recall that $m_{k_s}$ is the measurement outcome of shot s) and $\delta_{m_k,m_{k_s}} = 0$ if $m_k \neq m_{k_s}$. In one example where the set of measurement data comprises each distinct measurement outcome $m_{k_s}$ of the quantum measurement together with its associated frequency $f_k$, the estimator may be simplified to $E(O_\omega) = \sum_{k=1}^{r} f_k\omega_k(\{\mu_j^*\}_j)$.

Examples for results obtained with the method according to the present invention are presented below and explained with reference to Figs. 1 - 3. Details on how these results are obtained are presented in the following, in particular in Secs. IV. And V., and here only a brief summary is presented.

The results shown in Figs. 1 - 3 are obtained for quantum systems comprising a plurality of n qubits. The measurement is an informationally overcomplete POVM described by effects which are represented as tensor products of operators which act each on a single qubit. To be precise, the POVM has the effects $\Pi_k = \pi_{k_1} \otimes \ldots \pi_{k_n}$, wherein $\pi_k \in \{\frac{1}{3}|0\rangle\langle 0|, \frac{1}{3}|1\rangle\langle 1|, \frac{1}{3}|+\rangle\langle +|, \frac{1}{3}|-\rangle\langle -|, \frac{1}{3}|+i\rangle\langle +i|, \frac{1}{3}|-i\rangle\langle -i|\}$.

A Matrix Product representation with the same bond dimension $\chi$ is used for the coefficient tensor network representation, the operator tensor network representation and the effect tensor network representation. The parameters of the coefficient tensor network representation are initialized with initial parameter values such that the initial Matrix Product state representation has normally distributed entires. A variational sweeping optimization is used as an iterative routine to obtain the optimal values of the parameters for the coefficient tensors.

Fig. 1 shows results for estimating the value of the observable quantity associated with the Hermitian operator $O = X^{\otimes n} - Y^{\otimes n}$ for a GHZ state $|\mathrm{GHZ}\rangle = \frac{1}{\sqrt{2}}\left(|0\rangle^{\otimes n} + |1\rangle^{\otimes n}\right)$ prepared in a system of n=22 qubits. The bond dimension for the MPS representations of the coefficients, Hermitian operator and the effects is $\chi$ = 8. The loss function is presented below in Eq. (15). The figure shows the canonical duals second moment 31, the observable second moment 32, the MPS estimator second moment 33 and the MPS estimator penalty 34. Further explanations may be found below. The Figure is obtained for infinite statistics.

Fig. 2 shows results for estimating the value of the energy (observable quantity) associated with the Hamiltonian of the BODIPY-4 molecule. The ground state of the system is prepared by means of ADAPT-VQE techniques in a system of n=12 qubits. The bond dimension for the MPS representations of the coefficients, operator and the effects is $\chi$ = 30. The loss function is presented below in Eq. (15). The figure shows the canonical duals second moment 41, the MPS estimator second moment 42 and the MPS estimator penalty 43. Further explanations may be found below. The Figure is obtained for infinite statistics.

Fig. 3 show results for estimating the value of the observable quantity associated with the Hermitian operator $O = X^{\otimes n} - Y^{\otimes n}$ for the GHZ state $|\mathrm{GHZ}\rangle = \frac{1}{\sqrt{2}}\left(|0\rangle^{\otimes n} + |1\rangle^{\otimes n}\right)$ prepared in a system of n=6 qubits taking into account finite statistics for the measurement data obtained with $S = 10^6$ shots. The bond dimension for the MPS representations of the coefficients, operator and the effects is $\chi$ = 8. The loss function is presented below in Eq. (15). The figure shows the canonical duals second moment 51, the observable second moment 52, the MPS estimator second moment 53 and the MPS estimator penalty 54. The results for infinite statistics 55 are also shown in the Figure. Further explanations may be found below.

## I. INTRODUCTION

Recent advances in quantum science and technology are paving the way for the control of quantum systems with hundreds to thousands of qubits. In this regime, the cost of measurement to estimate (the mean value of) quantum observables becomes a bottleneck for quantum computing. It is therefore essential to find efficient ways of measuring different properties of a quantum system.

The standard way of estimating the expected value of a given observable is by measuring it on its own eigenbasis

$\{|o_k\rangle\langle o_k|\}_k$, where $O = \Sigma_k\, o_k\, |o_k\rangle\langle o_k|$, so that $\langle O\rangle = \mathrm{Tr}[O\rho] = \Sigma_k\, o_k p_k$. This approach has two problems in practice: firstly, you have to diagonalize O, which, for some observables, can be exponentially difficult for systems of increasing size. Secondly, implementing the measurement in the eigenbasis can involve a complex circuit that not only is usually unknown, but could also result in large estimation errors if such additional measurement circuit is implemented using imperfect gates, as it would with currently available noisy quantum devices [1].

An alternative procedure is to expand the observable into a basis of operators that can be measured efficiently, and estimate the observable by measuring each element of the basis individually. The most commonly used is the Pauli basis, made up of tensor products of single qubit Pauli operators. Note that this method solves the problem of having to implement complex measurements at the cost of having to estimate several observables. This measurement overhead can be partially mitigated by Pauli grouping techniques, that is by measuring commuting observables simultaneously [2-6].

Finally, an indirect way of estimating observables is through the use of randomised measurements, such as classical shadows protocol [7-9]. In classical shadows, first a random (local or global) Clifford rotation is applied in a n-qubit system followed by a computational basis measurement. The results of the measurement are then post-processed according to the observable to be estimated. An advantage of this method is the fact that several observables can be estimated from the same data. This procedure can be seen as the implementation of an informationally complete (IC) measurement, the reason why it can be used as a multi-observable estimation [10, 11]. In the next section, we will analyse the use of IC measurements for observable estimation in more details and point out its limitations. We will then present a new estimation method in Section IV and discuss how it goes beyond the standard IC measurement scheme, both in terms of efficiency and achieving low statistical error, which in turn means being able to handle larger systems and lower measurement overheads.

## II. MULTIPLE-OBSERVABLE ESTIMATION USING TOMOGRAPHICALLY COMPLETE MEASUREMENTS

An IC measurements [10] consist of a set of POVM effects $\{\Pi_k\}_{k=1}^{r}$ with $\sum_k \Pi_k = \mathbb{I}$ and $\Pi_k \geq 0$ that form an operator basis, which means that any observable O can be written as [12]

$$O = \sum_{k=1}^{r} \omega_k\, \Pi_k\,, \tag{1}$$

with $\omega_k \in \mathbb{R}$ being some reconstruction coefficients specific to the observable O. In order for a POVM to IC, the measurement must have at least $r \geq d^2$ linearly independent effects, where $d$ is the dimension of the Hilbert space (for example, $d = 2^n$ for a system of $n$ qubits).

The operator reconstruction formula (1) can be used to compute expectation values by averaging the reconstruction coefficients over the measurement statistics

$$\langle O\rangle = \mathrm{Tr}[O\rho] = \sum_k \omega_k\, \mathrm{Tr}[\Pi_k \rho] = \sum_k p_k\, \omega_k\,, \tag{2}$$

where $p_k = \mathrm{Tr}[\Pi_k\rho]$ are the probabilities of obtaining outcome $\Pi_k$ when measuring the state $\rho$. In the IC-POVM measurement framework, the observable expectation value is thus computed as the average of the coefficients $\omega_k$, seen as the possible realizations of a random variable $\omega$ each with probability $p_k$, over the probability distribution of the measurement, $\langle O\rangle = \mathbb{E}_p[\omega]$.

In realistic scenarios where we have access to a finite number of measurement shots $S$, the expectation value $\langle O\rangle$ is inferred through the unbiased estimator

$$\overline{O} = \sum_k f_k\, \omega_k\,, \tag{3}$$

where $f_k$ are the experimental frequencies of obtaining effect $\Pi_k$ after $S$ experimental measurement shots. Notice that in the limit of infinite statistics $S \to \infty$, the estimator converges to the true expectation value $\overline{O} \to \langle O\rangle$ with a $\sqrt{S}$ -scaling.

The statistical accuracy of the estimation procedure is quantified by the *estimator variance*

$$\begin{aligned}\mathrm{Var}\big[\omega\big|\Pi, O, \rho\big] &= \mathbb{E}\big[\omega^2\big] - \mathbb{E}[\omega]^2 \\ &= \sum_{k=1}^{r} p_k\, \omega_k^2 - \left(\sum_{k=1}^{r} p_k\, \omega_k\right)^2 ,\end{aligned} \tag{4}$$

where we have written explicitly the dependence of the estimator variance of all the elements involved in the estimation process, namely the effects $\Pi = \{\Pi_k\}$, the observable O (through the reconstruction coefficients $\omega_k$, see Eq. (1)) and the state $\rho$. For ease of notation, we will omit the explicit dependence in the following. As with the first moment estimator (2), in the real case of finite statistics the probabilities are substituted with the empirical frequencies $f_k$, with frequencies approaching the analytical probabilities $f_k \to p_k$ in the limit of infinite measurement shots $S \to \infty$. Of course, that the estimator variance is larger than the observable variance $\mathrm{Var}[O] := \langle O^2\rangle - \langle O\rangle^2 \leq \mathrm{Var}[\omega]$, which would be obtained if one could perform projective measurements directly on the eigenbasis of the observable [13]. Finally, notice that in addition to the task of observable estimation discussed here, an equivalent treatment in terms of effects and dual frames can be developed for state tomography [11].

## III. ESTIMATION VIA DUAL FRAMES

Equation (2) provides an unbiased estimator of the mean value of any observable as an average of the reconstruction coefficients $\omega_k$ over the observed outcome statistics of an IC measurement. The feasibility of this method depends however on our ability to compute $\omega_k$.

The standard approach to compute such coefficients is through the so-called *dual frames* [11, 14, 15]. Given a set of IC effects $\{\Pi_k\}$, another set of operators $\{D_k\}$ is called a dual frame to $\{\Pi_k\}$ if the following decomposition formulas hold

$$O = \sum_k \mathrm{Tr}[O D_k]\, \Pi_k = \sum_k \mathrm{Tr}[O \Pi_k]\, D_k\,, \quad \forall\, O\,, \tag{5}$$

where the reconstruction coefficients in Eq. (1) are then expressed as $\omega_k = Tr[OD_k]$. In what follows we will call the operators $D_k$ dual operators, dual effects, or simply duals. In the case that the IC POVM has exactly $d^2$ measurement effects it is called a minimal IC POVM, and it's dual effects are uniquely defined. If the IC POVM contains more than $d^2$ effects it is called an informationally over-complete POVM and some of its effects are not linearly independent from the rest. In this case the choice of the duals is not unique [11, 12].

A common procedure to obtain a set of dual effects is to consider

$$D_k = F^{-1}(\Pi_k), \tag{6}$$

where F is a linear operator called *frame operator,* which is defined as

$$F(\cdot) := \sum_k \mathrm{Tr}[\,\cdot\, \Pi_k]\, \Pi_k. \tag{7}$$

The dual effects computed in this manner are called canonical duals [11].

However, this procedure becomes impractical for large systems. For instance, if we have *n* qubits, computing the dual effects involves inverting an exponentially (in *n*) large map acting on exponentially (in *n*) number of effects. One may try to use an efficient representation for the dual effects such as tensor networks [16]. However, even if the measurement operators can be efficiently represented, their duals may require large bond dimension to be represented in this way. For this reason, the use of this estimator has been restricted to product measurements (i.e. measurements that act individually on each qubit) [7, 9] or measurements schemes that are implemented by specific shallow circuits [16-21].

In addition to obtaining the dual effects of more general measurements, it is also essential to find those that minimise the variance of the estimator (4), which in turn correspond to those that require the least amount of measurement shots to achieve a given measurement accuracy [10, 11]. As we mentioned, it turns out that in the case of informationally *over-complete* (OC) measurements, the duals are not uniquely defined, and among the possible valid choices it is possible to find those that minimise the estimator variance (4). In Refs. [10, 11] these *optimal dual effects* were characterised, but obtaining them require perfect knowledge of the state to be measured, which are not accessible in real case scenarios where quantum tomography is out of reach. To overcome this problem, recently several techniques have been proposed to optimise duals towards achieving low estimator variance without explicit knowledge of the state [22-24]. Unfortunately,

these methods are not scalable and are generally restricted to local measurements.

In the next section we propose a new method to obtain an unbiased estimator for any observable based on IC measurements and tensor networks. This method is scalable with respect to the system size, and can be applied to any IC measurement and observable provided that they also have an efficient description in terms of tensor networks. This is the case for instance of measurement strategies based on shallow circuits and many observables of interest such as many-body Hamiltonians describing material and chemistry problems. Moreover, in the case of OC-POVMs, our method can be turned into an optimization procedure that searches for estimators with low variance, which in turn means a lower the number of measurement rounds required to reach a given estimation precision.

## IV. EFFICIENT OBSERVABLE ESTIMATION WITH TENSOR NETWORKS

Instead of finding valid dual effects $\{D_k\}$ to a chosen measurement with effects $\{\Pi_k\}$, we focus directly on finding the reconstruction coefficients $\{\omega_k\}$ for which the unbiased estimator (3) attains the lowest variance. Of course, since there are exponentially many of these coefficients, $k \in [1, r]$ with $r \geq d^2$, an efficient classical description is then necessary. This can be achieved by representing $\omega_k$ as a matrix product state (MPS) [25] with fixed bond dimension $\chi$, which permits for an efficient classical description of the coefficients, and introduces controllable classical correlations in the post-processing of the measurement data.

First, we rewrite the unbiased estimator (3) and the estimator variance (4) in vectorized notation, which is convenient to interpret these operations as tensor networks contractions. Let II denote the matrix obtained by stacking together the vectorized effects as

$$\hat{\Pi} = \begin{bmatrix} | & | & & | \\ |\Pi_1\rangle\rangle & |\Pi_2\rangle\rangle & \cdots & |\Pi_r\rangle\rangle \\ | & | & & | \end{bmatrix} \in \mathbb{C}^{d^{2n}} \times \mathbb{C}^r , \quad (8)$$

and let $|\omega\rangle\rangle = \left[\omega_1, \ldots, \omega_r\right] \in \mathbb{R}^r$ denote the vector of the reconstruction coefficients, and $|O\rangle\rangle \in \mathbb{C}^{d^{2n}}$ a vectorized representation of the observable O. Notice that if one chooses the Pauli basis to perform the vectorization operation, then both $\hat{\Pi}$ and $|O\rangle\rangle$ have only real entries since both are hermitian operators, $\Pi_k = \Pi_k^\dagger$ and $O = O^\dagger$.

With this notation we can concisely express the decomposition formula (3) and the estimator variance (4) as

$$|O\rangle\rangle = \hat{\Pi}|\omega\rangle\rangle \quad (9a)$$

$$\mathrm{Var}[\omega] = \langle\langle\omega|\hat{P}|\omega\rangle\rangle - \langle\langle p|\omega\rangle\rangle^2 , \quad (9b)$$

where $|p\rangle\rangle = [p_1, \ldots, p_r]$ with $p_k = \langle\langle\rho|\Pi_k\rangle\rangle = \mathrm{Tr}[\rho\Pi_k]$ is the vector of outcome probabilities, and P is a diagonal matrix defined as $\hat{P}_{ij} = p_i\,\delta_{ij}$.

The expectation value $\mathbb{E}[\omega] = \langle\langle p|\omega\rangle\rangle$ term doesn't actually depend on the reconstruction coefficients, since $|p\rangle\rangle = \hat{\Pi}^\dagger|\rho\rangle\rangle$, and thus $\langle\langle p|\omega\rangle\rangle = \langle\langle\rho|\hat{\Pi}|\omega\rangle\rangle = \langle\langle\rho|O\rangle\rangle = \mathrm{Tr}[O\rho] = \langle O\rangle$. Note that this is only true in the case of infinite statistics where one has access to the true probabilities, whereas it is only approximately true in the case of finite statistics using frequencies. For variance minimization purposes however, it is still sufficient and more practical to consider minimization of the second moment term only because the first moment appears with a minus sign in the variance, and hence its inclusion in a variance minimization process could result into an effective bias towards solutions with larger expectation values. On a computational viewpoint, neglecting the first moment results has the additional benefit of making calculations less demanding.

We now proceed by showing how to express Eqs. (9) as contractions between structured tensor networks. The main idea is to also represent the effect matrix $\hat{\Pi}$ in terms of a matrix product operator (MPO), the vectorized observable $|O\rangle\rangle$ as a matrix product state (MPS), and that the reconstruction coefficients $|\omega\rangle\rangle$ also as an MPS. In practice we will require these representations to be efficient, i.e. to use low bond dimension, so that all contractions can be performed efficiently. This is the case of observables that can be written as a limited sum of Pauli strings (*e.g.* local Hamiltonians, single Pauli strings, magnetisation) and measurements that are performed through shallows circuits (*e.g.* local measurements,

projections over efficiently representable MPS states).

In order to distinguish them from their general operator form, we denote these efficient tensor representations of the effects, observable and estimator coefficients as $\Pi$, $o$ and $w$ respectively. Then, the reconstruction formula (9a) can be diagrammatically expressed as a tensor network contraction as

$$o = \Pi\omega \quad \longleftrightarrow$$

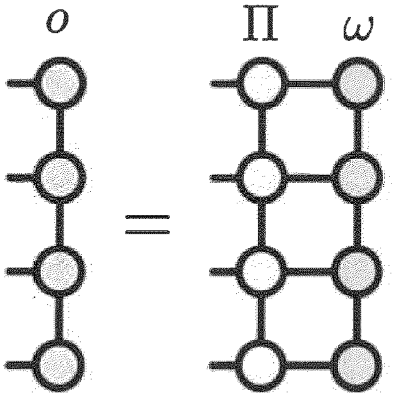


, (10)

where each open leg on the left-hand side of the diagram have dimension $d^2$, and the connected bonds represent summation over the local indices $(k_1, k_2, ..., k_n)$ each of size $k_i \in [1, s]$ with $s^n = r$, obtained by expanding the global multi index $k \in [1, r]$ in terms of the local sites.

Similarly, one can also represent the second moment in the estimator variance (9b) in terms of a tensor network contraction as

$$\mathbb{E}[\omega^2] = \omega^{\intercal} P \omega \quad \longleftrightarrow \qquad (11)$$

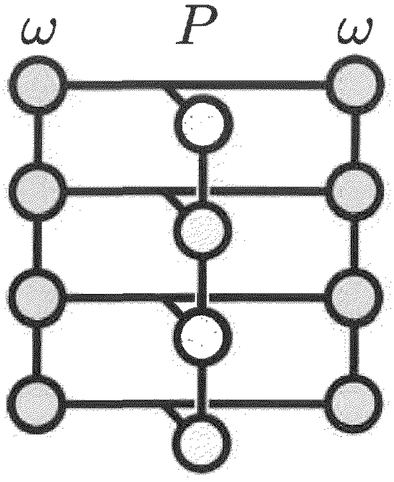


where $\omega$ is an MPS as before, and $P$ is an MPO representation of the diagonal probability matrix $\hat{P}$ introduced in Eq. (9b). While the transposition operation for $\omega$ is implied in the tensor diagram by the way tensors are connected, we make it explicit with $\omega^{\intercal}$ when writing the equations for consistency.

Notice that while we have represented the matrix probabilities $P$ as an MPO, this is not a strict requirement as in fact any efficient classical tensor network representation of the measured outcomes suffice.

The task we want to solve is to find an MPS estimator $\omega$ which provides an unbiased estimation of the observable (10), and also attains low variance (11). That is, we want to solve the following constrained optimization problem

$$\omega^* = \arg\min_{\omega} \mathrm{Var}[\omega|\Pi, O, \rho] = \arg\min_{\omega} \omega^{\intercal} P \omega \quad , \qquad (12)$$

with w such that $o = \Pi\omega$ where we have neglected the expectation value $\mathbb{E}[\omega]^2$ in in the variance because, as discussed before, it doesn't depend on the choice of the estimator as long as the constraint is satisfied. Since it is more difficult to solve directly the constrained optimisation problem, we instead consider the equivalent problem of minimizing a penalty-regularized loss function

$$L(\omega) = (1-\lambda)\,\omega^{\intercal} P \omega + \lambda\,\|o - \Pi\omega\|_2^2\,, \tag{13}$$

where $\lambda \in \mathbb{R}$ is an hyperparameter weighting the importance of the variance and penalty term in the loss function, and $\|A\|_2^2 := \mathrm{Tr}[A^{\dagger}A]$ is the 2-norm induced by the Hilbert-Schmidt inner product ((AIB)) = Tr[A^B].

Expanding the norm term and neglecting the constant term ||o||, one can rewrite the loss function as

$$L(\omega) = (1-\lambda)\,\omega^{\intercal} P \omega + \lambda\left(\omega^{\intercal}\Pi^{\dagger}\Pi\omega - 2\mathrm{Re}\,\omega^{\intercal}\Pi^{\dagger} o\right) \tag{14}$$

where we consider the MPS estimator $\omega$ to have only real entries, so $\omega^{\dagger} = \omega^{\intercal}$. This loss function can be diagrammatically represented as

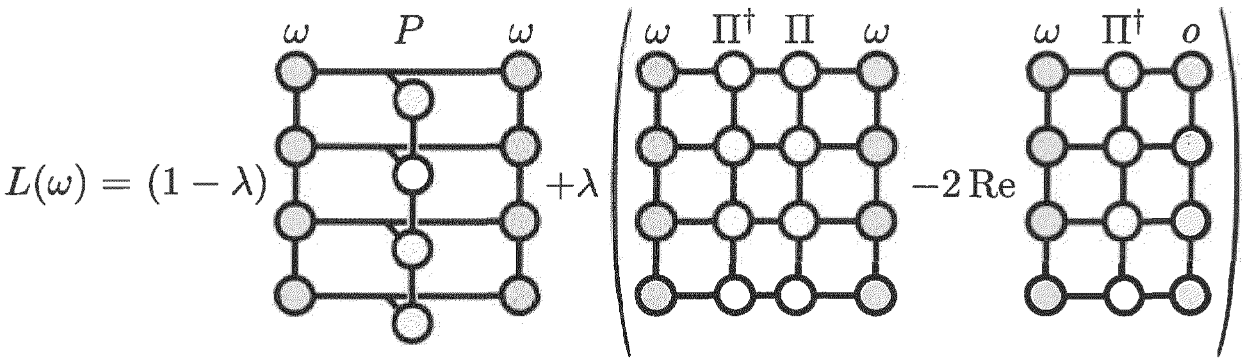


The *global* cost function $L(\omega)$ is a quadratic function of the estimator tensor w and, as we will now show, it can be reduced to a sequence of *local* quadratic problems whose solutions are obtained by solving linear systems of equations. Of course, reducing the minimization of a global function to a sequence of local ones comes at the risk of encountering local, rather than global, minima of the global cost. Nonetheless, such iterative methods very common in the tensor network literature [25, 26], are in practice found to converge to good solutions.

Let $\omega_k$ denote the local tensor at site k in the MPS estimator $\omega$. Suppose we fix all the tensors $\omega_j$ at the remaining sites $j \neq k$, then the cost function $L(\omega)$ in terms of only the $k$-th local tensor amounts to

$$\begin{aligned} L(\boldsymbol{\omega}_k) = (1-\lambda)\,\boldsymbol{\omega}_k^{\intercal} A_k \boldsymbol{\omega}_k + \\ +\lambda\left(\boldsymbol{\omega}_k^{\intercal} B_k \boldsymbol{\omega}_k - 2\mathrm{Re}\left[\boldsymbol{\omega}_k^{\intercal}\boldsymbol{v}_k\right]\right), \end{aligned} \tag{15}$$

where $A_k$, $B_k$ and $v_k$ are the so-called environment tensors obtained by contracting all the tensors but $\omega_k$ in the tensor networks in Eq. (14). We use a bold notation for $\omega_k$ and $v_k$ to indicate that these tensors behave like vectors, while $A_k$ and $B_k$ instead act like matrices. These can be obtained by an appropriate reshaping of the tensors, as clear from the diagrammatic representation

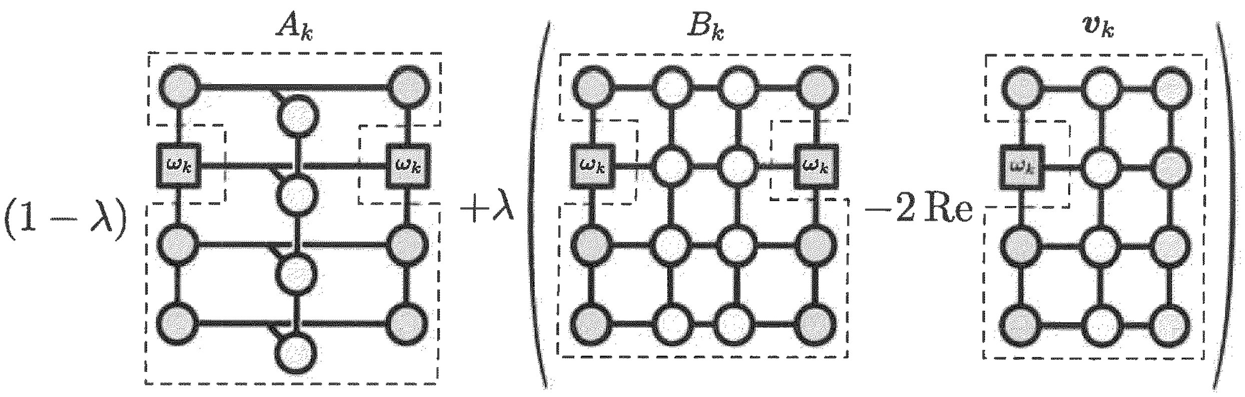

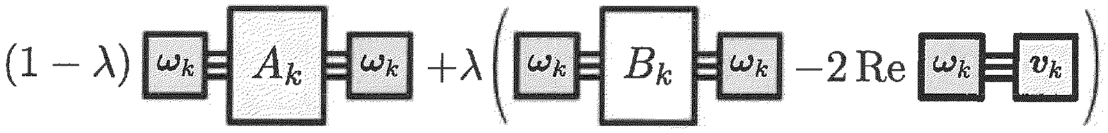

The matrices $A_k$ and $B_k$ are of size ($s\chi^2$, $s\chi^2$), where $\chi$ is the bond dimension of the MPS estimator, and s is the dimension of the local sites in the estimator, defined by the number of outcomes per qubit associated to the measurement process (for example, s = 6 for an OC-POVM consisting of 6 possible outcomes per qubit). Also, since we consider the estimator MPS to contain only real entries, the linear term in Eq. (15) can be further simplified to Re $\left[\omega_k^{\mathsf{T}} v_k\right] = \omega_k^{\mathsf{T}} \mathrm{Re}\left[v_k\right]$.

The local loss function $L(\omega_k)$ is a quadratic form with respect to the variables $\omega_k$, and its minimum is found by solving the linear system of equations [27]

$$\begin{aligned} \omega_k^{\text{opt}} &= \arg\min_{\omega_k} L(\omega_k) \\ \left[(1-\lambda)(A_k + A_k^{\mathsf{T}}) + \lambda(B_k + B_k^{\mathsf{T}})\right]\omega_k^{\text{opt}} &= 2\lambda \,\mathrm{Re}\, v_k \end{aligned} \qquad (16)$$

As customary in tensor network procedures, we variationally search for the minimum of the global loss function $L(\omega)$ (14) by sweeping back and forth over the sites *k* of the MPS and solving the local quadratic problems $L(\omega_k)$ (15) using the explicit solution Eq. (16).

Summarizing, we have shown how to express the problem of finding a low variance observable estimator as an optimization task defined in terms of tensor networks. Also, we have proposed an efficient solution to such optimization problem by reducing it to the task of sequentially solving linear systems of equations for the local sites in the tensor network. We now proceed discussing some practicalities of the proposed method.

**A.** Optimization details

Importantly, the variational sweeping optimization of the MPS estimator w greatly benefits from standard tensor network techniques like canonization [25]. Indeed, we find that the use canonization helps both in speeding up the convergence to the solution, and also to reduce numerical instabilities arising from ill-conditioned matrices in (16). Thus, note that in all the numerical experiments reported below we always use canonization while optimizing the MPS.

Furthermore, in addition to the explicit solution in Eq. (16), the local optimization problem (15) can also be solved by means of numerical optimization methods. In fact, we found that a combination of both approaches usually helps in finding better solutions, especially when solving the linear system becomes unstable due to ill-conditioned matrices. Consequently, in practice we generally optimize the estimator MPS by first sweeping through the sites using the explicit solution provided by Eq. (16), and then switching to the numerical optimizer L-BFGS-B [28], which is able to further improve the solution once the explicit method has reached convergence or fails due to numerical instabilities.

**B. Unbiased estimation**

If not for the hyperparameter A, the loss function $L(\omega)$ (13) would treat the estimator variance and the reconstruction penalty on an equal footing. However, for the estimation to be meaningful and provide an unbiased estimator for the observable of interest, it is strictly necessary that the penalty term is negligible at the end of the optimization loop.

In fact, let $O_\omega = \Sigma_k \, \omega_k \Pi_k$ denote an *approximate* reconstruction of the observable *O* constructed with the MPS estimator $\omega$, for example the one obtained at the end of the optimization procedure (16). Assuming that the penalty is small $\|O - O_\omega\|_2 \leq \varepsilon$, then we can bound the bias in the estimation procedure as

$$\begin{aligned} \text{Bias} := |\langle O\rangle - \langle O_\omega\rangle| &= |\mathrm{Tr}[(O - O_\omega)\,\rho]| \\ &\leq \|O - O_\omega\|_2 \|\rho\|_2 \leq \varepsilon \end{aligned} \qquad (17)$$

where we have used Hölder's inequality [29], and the fact that purity of a quantum state is lower than one, $\|\rho\|_2 = \sqrt{\mathrm{Tr}[\rho^2]} \leq 1$. 1. This means that the bias in the estimation process can be kept under control by monitoring

the penalty term in the loss function, and checking that this is below the chosen target accuracy. Importantly, note that since we have used the true state $\rho$, the bound in Eq. (17) is valid only in the infinite statistics case, which is however obtained in the limit of large number of measurement shots.

### C. Relation to using proper dual effects

If the optimization procedure is successful, we obtain an MPS estimator implementing an unbiased estimator of the observable $O = \Sigma_k \omega_k \Pi_k$. This decomposition can thus be used to provide unbiased expectation values for any state $\rho$, namely $\langle O \rangle = \mathrm{Tr}[O\rho] = \Sigma_k \omega_k p_k, \forall \rho$. If this is the case, however frame theory tells that there is a set of dual operators $\{D_k\}$ to the measurement effects $\{\Pi_k\}$ such that the estimation coefficients can be expressed as $\omega_k = Tr[OD_k]$ [11].

Importantly, our approach is entirely observable-specific as it directly parameterizes the reconstruction coefficients $\omega_k = \omega_k(O)$, rather than relying on dual operators $D_k$ which are valid for any observable. Despite such parameterization is much less restrictive in terms of reconstruction constraints, since any unbiased estimation process passes through dual frames [11], we underline that it cannot achieve lower estimation variances than those achievable if one would optimize some tensor-network representation of the dual operators instead of the reconstruction coefficients.

Nonetheless, it's worth stressing that the direct parameterization of the reconstruction coefficients proposed here not only is more targeted to the specific task of estimating a target observable with high precision, but it comes with great computational benefits related to the fact that we require less tensor contractions and less overall bond dimension than necessary for an optimization with respect to proper dual operators.

## V. NUMERICAL RESULTS

In this section we report numerical results for several observable estimation tasks, on different system sizes and also for the realistic scenario of finite statistics measurement data. In all the numerical experiments reported below, we consider the readily implementable and effective product measurement strategy consisting of measuring the eigenstates of the Pauli matrices $X$, $Y$ and Z. Each qubit is then associated with an OC-POVM $\{\pi_k\}_k$ whose effects are

$$\pi_k \in \left\{ \frac{1}{3}|0\rangle\langle 0|,\ \frac{1}{3}|1\rangle\langle 1|,\ \frac{1}{3}|+\rangle\langle +|,\ \frac{1}{3}|-\rangle\langle -|,\ \frac{1}{3}|+i\rangle\langle +i|,\ \frac{1}{3}|-i\rangle\langle -i| \right\}. \quad (18)$$

The multi-qubit OC-POVM is then given by $\{\Pi_k\}_k = \{\pi_{k_1} \otimes ... \otimes \pi_{k_n}\}_{k_1,...,k_n}$ consisting of $6^n$ total effects.

Also, we note that before the optimization process (16) begins, the MPS estimators $\omega_k$ are initialized with a random MPS with normally distributed entries.

### A. GHZ states

We start with the example of estimating the observable $O = X^{\otimes n} - Y^{\otimes n}$ using the GHZ state

$$|\mathrm{GHZ}\rangle = |\psi\rangle = \frac{|0\rangle^{\otimes n} + |1\rangle^{\otimes n}}{\sqrt{2}}. \quad (19)$$

One can easily verify that

$$O\,|\psi\rangle = \frac{1-(-i)^n}{\sqrt{2}}\,|0\rangle^{\otimes n} + \frac{1-i^n}{\sqrt{2}}\,|1\rangle^{\otimes n}, \quad (20)$$

so that whenever the number of qubits is even $n = 2q$, the state is an eigenstate of the observable $O_q|\psi_q\rangle = \lambda_q|\psi_q\rangle$ with eigenvalues $\lambda_q = 1 - (-i)^{2q} = 1 - i^{2q} = 1 - (-1)^q$, with $\lambda_q \in \{0,2\}$ for $q$ even or odd, respectively. This means that the observable variance $\mathrm{Var}[O] := \langle O^2 \rangle - \langle O \rangle^2$ that we would obtain if we measured the observable $O$ directly would be zero.

In Fig. 1 we report results for optimizing the MPS estimator for a system composed of $n = 22$ qubits, with a maximum bond dimension of the MPS estimator of $\chi = 8$, and with the regularization coefficient in the loss function (15) set to A = 0.999. Note that with $n = 22$ qubits Eq. (20) implies the state is an eigenstate of the observable with eigenvalue $\lambda = 2$,

hence $\langle O \rangle = 2$.

In the plot we also report the estimator second moment corresponding to canonical duals (6), which amounts to $\mathbb{E}\left[\omega_{\mathrm{can}}^2\right] = 2 \times 3^n$, which scales exponentially with the system size when used to estimate large-weight Pauli strings [7, 22]. Additionally, we also report the lowest second moment possible which would be achieved by measuring the state in the eigenbasis of the observable. This amounts to $\mathbb{E}\left[O^2\right] = \mathrm{Tr}\left[O^2 \left|\psi\right\rangle\left\langle\psi\right|\right] = 4$, since the state is an eigenstate with eigenvalue 2.

Using the sweeping iterative local optimization routine (15), we can see that both the second moment $\mathbb{E}\left[\omega^2\right]$ and the penalty term $\|o - \Pi\omega\|_2$ are minimized during training. After only 5 sweeps through the MPS chain, we are able to find a set of coefficients w which not only satisfy the observable reconstruction constraint with low error, hence providing an unbiased estimator, but most importantly match the performance of the best possible estimation strategy.

This example shows that, even by performing a local measurement, our tensor-network estimation strategy is able of capturing the correlations in the measurement data and post-process it to provide near-zero variance, identifying that the measured state is an eigenstate of the observable.

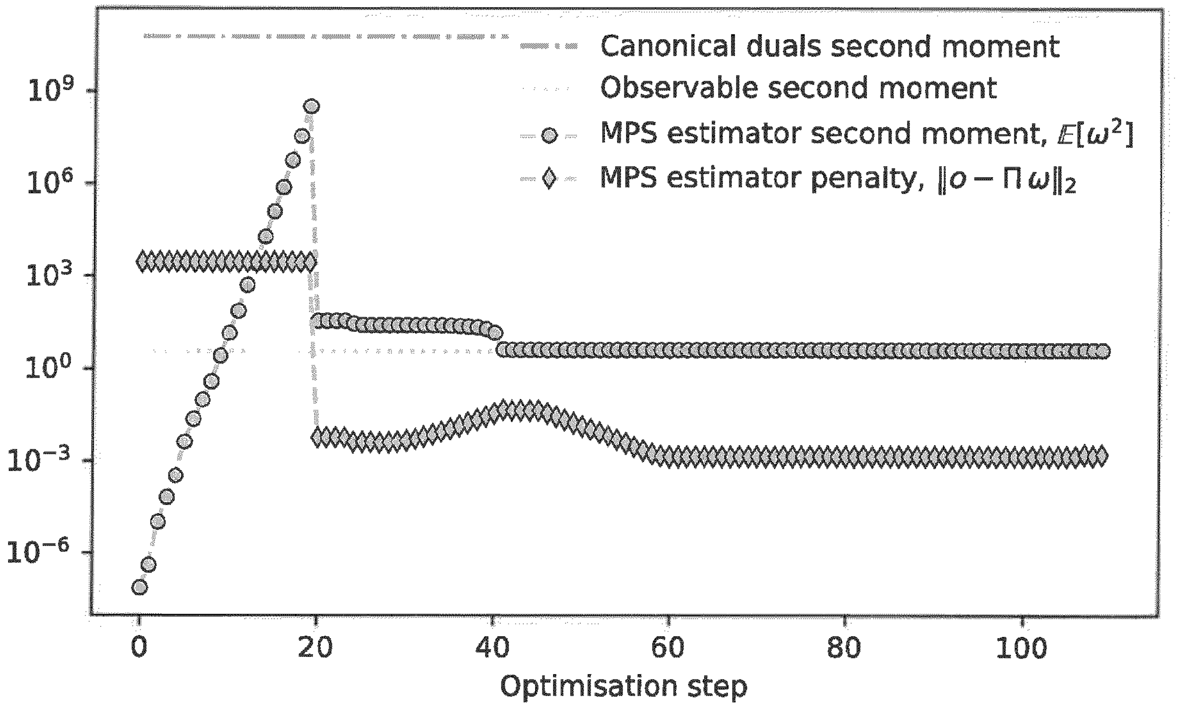


FIG. 1. Iterative minimization of the loss (15) for a system of $n = 22$ qubits, with MPS estimator maximum bond dimension $\chi = 8$ and regularization coefficient $\lambda = 0.999$. The measured state is an eigenstate of the observable to be estimated with eigenvalue 2, so that $\langle O \rangle = 2$ and $\langle O^2 \rangle = 4$. After optimization the MPS estimator reaches low second moment and penalty, thus providing an accurate and unbiased estimation.

B. Chemical example

We now showcase the applicability of our measurement optimization scheme on a quantum chemistry example, where the task is to minimize the estimation variance associated to measuring the ground state energy of a chemical Hamiltonian. We consider the BODIPY-4 molecule which has remarkable potential applications for photodynamic therapy, and whose properties have been recently investigated with Variational Quantum Eigensolver (VQE) approaches in ref. [30].

We consider an = 12 qubit system prepared in the ground state of the BODIPY-4 Hamiltonian. obtained by means of ADAPT-VQE techniques [31] following the methods proposed in ref. [30]. The observable O to be estimated is the Hamiltonian of the quantum system, can be written in the Pauli basis as

$$O = \sum_{\ell=1}^{1819} c_\ell P_\ell , \tag{21}$$

containing 1819 Pauli strings. In order to avoid numerical precision problems arising from operators having large norms, we modify the observable by first removing the constant energy shift related to the all-identities Pauli string, and then normalize the observable as $O \leftarrow O/\sqrt{\|O\|_2}$ .

In Fig. 2 we report the results for optimizing the an MPS estimator with maximum bond dimension x = 30, and with regularized coefficient λ = 0.999 in the loss function (15).

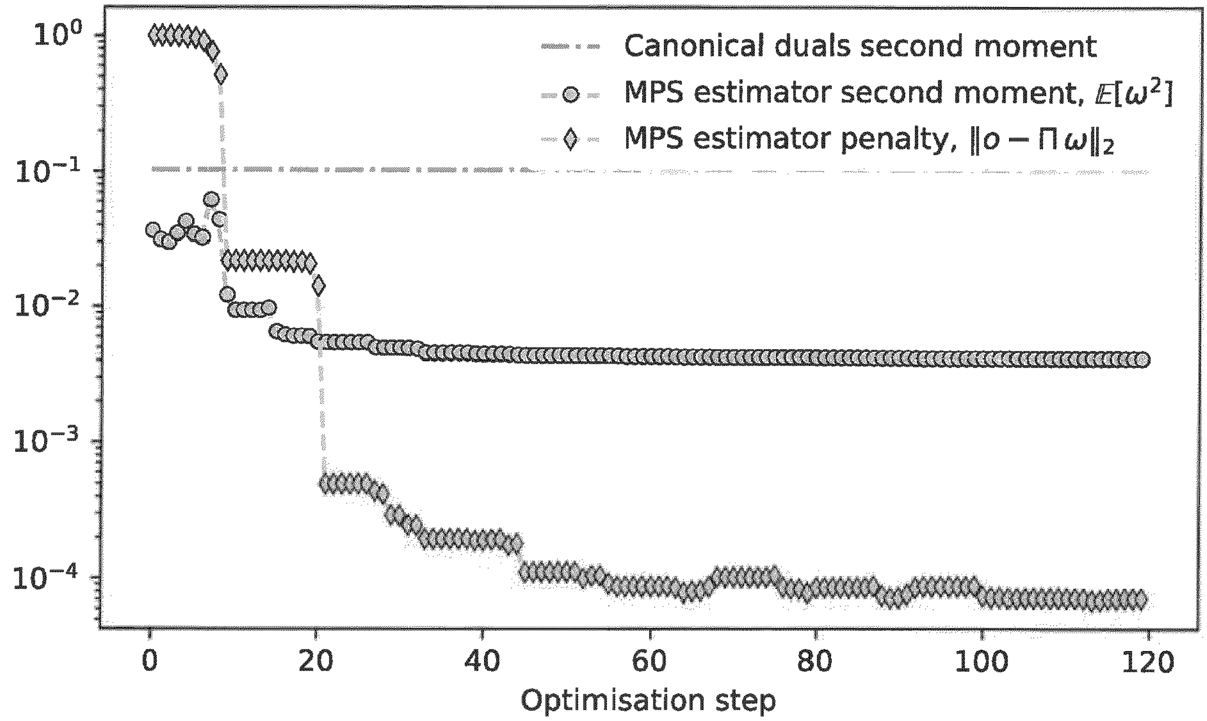


FIG. 2. Iterative minimization of the loss (15) for a system of $n$ = 12 qubits, with MPS estimator maximum bond dimension $\chi$ = 30 and regularization coefficient A = 0.999. The measured state is the ground state of the BODIPY molecule, and the observable to be estimated is the energy of the system. Again, we see that after optimization the MPS estimator reaches low second moment and penalty, thus providing an accurate and unbiased estimation of the energy.

As with the previous case, the optimization of the MPS estimator is capable of finding a valid set of reconstruction coefficients capable of providing and unbiased estimation of the ground state energy with near-zero variance. In particular, note how with our method we could reduce the estimator variance by a factor of ≈ 25 compared with using fixed tensor product canonical duals.

### C. Finite statistics

All previous examples were performed using the exact effects probabilities $p_k = \mathrm{Tr}[\Pi_k \rho]$, which can only be obtained using an infinite measurement budget. We now show how the proposed method applies also when one has access only to a limited number S of measurement outcomes, and hence deals with observed frequencies $f_k$ rather than the probabilities $p_k$ when computing the loss functions (14).

We investigate finite statistics with the GHZ example already introduced in Sec. VA on a system of $n$ = 6 qubits and with a total of $S = 10^6$ measurement shots. We report the results in Fig. 3, where we also plot the data for optimizing the loss function using infinite statistics for comparison.

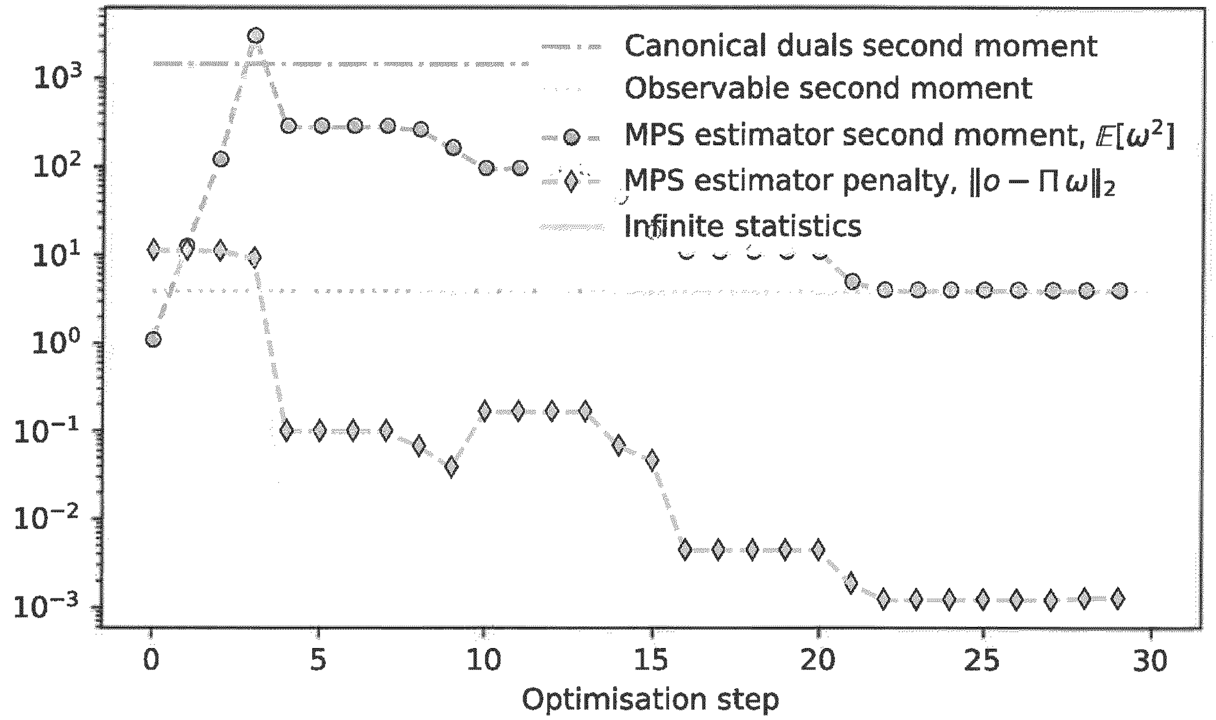


FIG. 3. Iterative minimization of the loss (15) for the same setup described in Fig. 1, but using a system of $n = 6$ qubits and with finite statistics using $S = 10^6$ total measurement shots, instead of the analytical probabilities (infinite statistics). One can see that the optimization routine can be used also for the realistic case of a limited measurement budget, even matching the same performances obtained with exact probabilities.

After the iterative optimization, the MPS estimator with limited shots matches the performances obtained with infinite statistics, thus confirming the proposed method can be applied in practical cases. Summarizing, our simulations suggests that the tensor-network observable estimation is capable of providing unbiased and low-variance estimations even in the finite statistics regime, at the cost of a slightly slower convergence to solution.

The following state of the art cited above is incorporated by reference in this application.

[1] J. Preskill, Quantum Computing in the NISQ era and beyond, Quantum 2, 79 (2018).

[2] P. Gokhale, O. Angiuli, Y. Ding, K. Gui, T. Tomesh, M. Suchara, M. Martonosi, and F. T. Chong, Minimizing State Preparations in Variational Quantum Eigensolver by Partitioning into Commuting Families, arXiv e-prints , arXiv:1907.13623 (2019), arXiv:1907:13623 [quant-ph].

[3] A. Jena, S. Genin, and M. Mosca, Pauli Partitioning with Respect to Gate Sets, arXiv e-prints , arXiv:1907.07859 (2019), arXiv:1907.07859 [quant-ph].

[4] V. Verteletskyi, T.-C. Yen, and A. F. Izmaylov, Measurement optimization in the variational quantum eigensolver using a minimum clique cover, J. Chem. Phys. 152, 124114 (2020), arXiv:1907.03358 fquant-ph]

[5] A. Zhao, A. Tranter, W. M. Kirby, S. F. Ung, A. Miyake, and P. J. Love, Measurement reduction in variational quantum algorithms, Phys. Rev. A 101, 062322 (2020), arXiv:1908.08067 [quant-ph].

[6] O. Crawford, B. v. Straaten, D. Wang, T. Parks, E. Campbell, and S. Brierley, Efficient quantum measurement of Pauli operators in the presence of finite sampling error, Quantum 5, 385 (2021).

[7] H.-Y. Huang, R. Kueng, and J. Preskill, Predicting many properties of a quantum system from very few measurements, Nature Physics 16. 1050-1057 (2020).

[8] A. Elben, S. T. Flammia, H.-Y. Huang, R. Kueng, J. Preskill, B. Vermersch, and P. Zoller, The randomized measurement toolbox, Nature Reviews Physics 5, 9-24 (2022).

[9] M. Paini, A. Kalev, D. Padilha, and B. Ruck, Estimating expectation values using approximate quantum states, Quantum 5, 413 (202!).

[10] G. M. D'Ariano and P. Perinotti, Optimal data processing for quantum measurements, Phys. Rev. Lett. 98, 020403 (2007).

[11] L. Innocenti, S. Lorenzo, I. Palmisano, F. Albarelli, A. Ferraro, M. Paternostro, and G. M. Palma, Shadow tomography on general measurement frames, PRX Quantum 4, 040328 (2023).

[12] G. M. D'Ariano, P. Perinotti, and M. F. Sacchi, Informationally complete measurements and group representation, Journal of Optics B: Quantum and Semiclassical Optics 6, S487 (2004).

[13] S. Massar, Uncertainty relations for positive-operator-valued measures, Phys. Rev. A 76, 0402114 (2007).
[14] P. G. Casazza and G. Kutyniok, eds., Finite Frames: Theory and Applications, Applied and Numerical Harmonic Analysis (Birkhäuser Boston, Boston, 2013).
[15] F. Krahmer, G. Kutyniok, and J. Lemvig, Sparsity and spectral properties of dual frames,Linear Algebra and its Applications 439, 982 (2013), 17th Conference of the International Linear Algebra Society, Braunschweig, Germany, August 2011.
[16] A. A. Akhtar, H.-Y. Hu, and Y.-Z. You, Scalable and Flexible Classical Shadow Tomography with Tensor Networks, Quantum 7, 1026 (2023).
[17] H.-Y. Hu, S. Choi, and Y.-Z. You, Classical Shadow Tomography with Locally Scrambled Quantum Dynamics, arXiv e-prints , arXiv:2107.04817 (2021), arXiv:2107.04817 [quant-ph].
[18] M. Arienzo, M. Heinrich, I. Roth, and M. Kliesch, Closed-form analytic expressions for shadow estimation with brickwork circuits, arXiv e-prints , arXiv:2211.09835 (2022), arXiv:2211.09835 [quant-ph].
[19] C. Bertoni, J. Haferkamp, M. Hinsche, M. Ioannou, J. Eisert, and H. Pashayan, Shallow shadows: Expectation estimation using low-depth random clifford circuits (2023), arXiv:2209.12924 [quant-ph].
[20] H.-Y. Hu, A. Gu, S. Majumder, H. Ren, Y. Zhang, D. S. Wang, Y.-Z. You, Z. Minev, S. F. Yelin, and A. Seif, Demonstration of Robust and Efficient Quantum Property Learning with Shallow Shadows, arXiv e-prints , arXiv:2402.17911 (2024), arXiv:2402.17911 [quant-ph].
[21] R. M. S. Farias, R. D. Peddinti, I. Roth, and L. Aolita, Robust shallow shadows, arXiv e-prints , arXiv:2405.06022 (2024), arXiv:2405.06022 [quant-ph].
[22] J. Malmi, K. Korhonen, D. Cavalcanti, and G. García-Pérez, Enhanced observable estimation through classical optimization of informationally over-complete measurement data - beyond classical shadows (2024), arXiv:2401.18049 [quant-ph].
[23] L. E. Fischer, T. Dao, I. Tavernelli, and F. Tacchino, Dual frame optimization for informationally complete quantum measurements (2024), arXiv:2401.18071 [quant-ph].
[24] A. Caprotti, J. Morris, and B. Dakić, Optimising quantum tomography via shadow inversion (2024), arXiv:2402.06727 [quant-ph].
[25] U. Schollwöck, The density-matrix renormalization group in the age of matrix product states, Annals of Physics 326, 96 (2011), january 2011 Special Issue.
[26] Y. Guo and S. Yang, Quantum error mitigation via matrix product operators, PRX Quantum 3, 04031.3 (2022).
[27] K. B. Petersen and M. S. Pedersen, The Matrix Cookbook (Technical University of Denmark, 2012).
[28] D. C. Liu and J. Nocedal, On the limited memory bfgs method for large scale optimization, Mathematical Programming 45, 533 525 (1989).
[29] J. Watrous, The Theory of Quantum Information (Cambridge University Press, 2018).
[30] A. Nykänen, L. Thiessen, E.-M. Borrelli, V. Krishna, S. Knecht, and F. Pavošević, $\delta$adapt-vqe: Toward accurate calculation of excitation energies on quantum computers for bodipy molecules with application in photodynamic therapy (2024), arXiv:2404.16149 [physics.chem-ph].
[31] H. R. Grimsley, S. E. Economou, E. Barnes, and N. J. Mayhall, An adaptive variational algorithm for exact molecular simulations on a quantum computer, Nature Communications 10, 10.1038/s41467-01910988-2 (2019).

## Claims

**1.** Method for estimating a value of an observable quantity of a state of a quantum many-body system on the basis of a set of measurement data obtained from a plurality of shots of a quantum measurement of said quantum state, said quantum measurement being described by an informationally complete Positive Operator Valued Measure with a plurality of effects, each effect being associated with a measurement outcome, said set of measurement data being representative of the measurement outcomes of said quantum measurement, said method comprising:

(i) modelling a Hermitian operator associated with said observable quantity by a parameter-dependent model, said model being defined by a linear combination of said effects, wherein the coefficients of said linear combination have a coefficient tensor network representation comprising a plurality of parameter-dependent coefficient tensors;
(ii) representing the Hermitian operator by an operator tensor network representation comprising a plurality of operator tensors;
(iii) representing the effects by an effect tensor network representation comprising a plurality of effect tensors;
(iv) determining, by a classical computer, optimal values for the parameters of the coefficient tensors such that a value of a cost function which comprises a term proportional to a penalty function representative of a distance between the operator and the model operator complies with a predetermined target criterion, wherein the

classical computer calculates the value of the cost function on the basis of the coefficient tensors, the effect tensors and the operator tensors in accordance with a predetermined contraction rule of physical and virtual indices of the tensor network representations;
(v) determining, by the classical computer, the estimation value of the observable quantity by use of the measurement data and an estimator for an expectation value of the model operator having the optimal parameter values.

**2.** Method according to claim 1, wherein said informationally complete Positive Operator Valued Measure is informationally overcomplete, and wherein said cost function is a penalty-regularized cost function comprising the term proportional to the penalty function and a further term proportional to a measure of statistical dispersion of the estimator.

**3.** Method according to claim 1 or 2, said method further comprising:

- providing the quantum many-body system;
- providing state preparation means operative to prepare the quantum state of the quantum system;
- providing measurement means operative to apply said quantum measurement to said quantum state;
- implementing the plurality of shots of the quantum measurement of said quantum state, wherein each shot comprises operating said state preparation means to thereby prepare said quantum state followed by operating said measurement means, to thereby obtain one of said measurement outcomes.

**4.** Method according to anyone of the preceding claims, wherein said quantum system comprises a plurality of quantum mechanical d-level systems, $d \geq 2$, and wherein each effect is such that it is representable as a tensor product of operators each of which is acting on only one quantum mechanical d-level systems.

**5.** Method according to anyone of the preceding claims, wherein said target criterion comprises a minimization or a maximization criterion.

**6.** Method according to anyone of the preceding claims, wherein the coefficient tensor network representation and/or the operator tensor network representation and/or the effect tensor network representation is a Matrix Product representation.

**7.** Method according to anyone of the preceding claims, wherein determining the optimal value of the parameters comprises an iterative routine, wherein each iteration comprises selecting a subset of the coefficient tensors and updating only the parameters associated with the selected coefficient tensors.

**8.** Method according to anyone of the preceding claims, wherein the measure of statistical dispersion comprises a second moment of the estimator.

**9.** Method according to anyone of the preceding claims, wherein the penalty function comprises a function of an operator norm of a difference between the operator and the model operator.

**10.** Computer program for estimating a value of an observable quantity of a state of a quantum many-body system on the basis of a set of measurement data obtained from a plurality of measurement shots of a quantum measurement of said quantum state, said quantum measurement being described by an informationally complete Positive Operator Valued Measure with a plurality of effects, each effect being associated with a measurement outcome, said set of measurement data being representative of the measurement outcomes of said quantum measurement, wherein said computer program comprises instructions, which, when the computer program is executed by a classical computer, cause the classical computer to carry out the following steps:

- receiving said set of measurement data, a representation of a Hermitian operator which is associated with the observable quantity and a representation of the effects as an input;
- determining optimal values for parameters of a plurality of parameter-dependent coefficient tensors of a coefficient tensor network representation of coefficients of a parameter-dependent model of said Hermitian operator, said model being defined by a linear combination of the effects with said coefficients, such that a value of a cost function which comprises a term proportional to a penalty function representative of a distance between the Hermitian operator and the model operator complies with a predetermined target criterion, wherein the value of the cost function is calculated on the basis of the coefficient tensors, a plurality of effect tensors of an effect tensor

network representation of the effects and a plurality of operator tensors of an operator tensor network representation of the Hermitian operator in accordance with a predetermined contraction rule of physical and virtual indices of the tensor network representations;
- determining, by the classical computer, the estimation value of the observable quantity by calculating an estimator value for an expectation value of the model operator having the optimal parameter values given the measurement data.

**11.** Data carrier having stored thereon the computer program according to claim 10.

**12.** Computing system comprising a classical computer and a quantum computer, said quantum computer comprising a quantum many-body system, state preparation means operative to prepare a quantum state of the quantum system, measurement means operative to apply a quantum measurement to said quantum state, said quantum measurement being described by an informationally complete Positive Operator Valued Measure with a plurality of effects, each effect being associated with a measurement outcome, said quantum computer being operative to implement a plurality of shots of the quantum measurement by repeatedly operating said state preparation means to thereby prepare said quantum state followed by operating said measurement means to thereby obtain a measurement outcome, said classical computer being operative to receive a set of measurement data representative of the measurement outcomes, and to execute the computer program according to claim 11.

Fig. 1

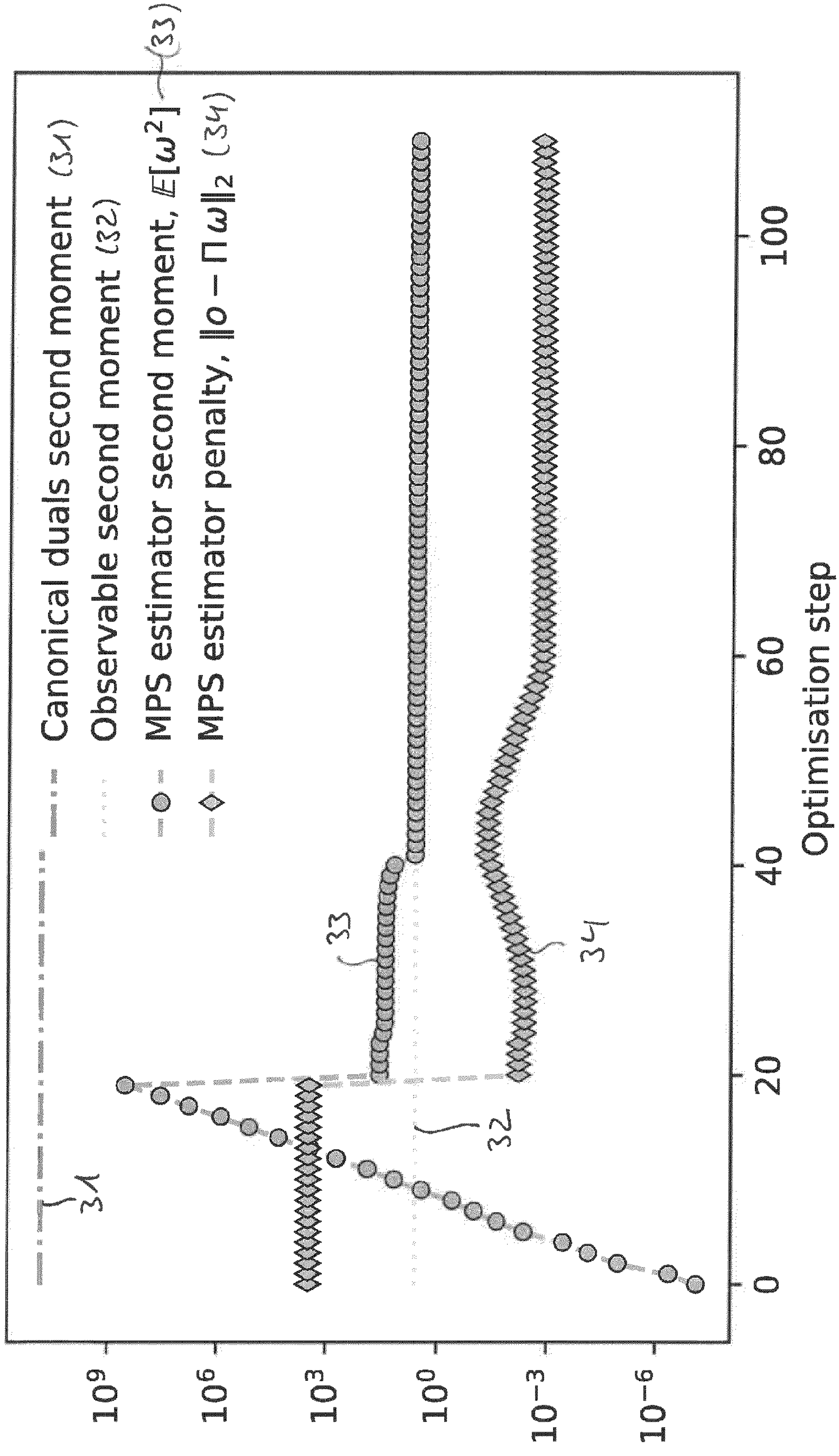
Canonical duals second moment (31)
Observable second moment (32)
MPS estimator second moment, $\mathbb{E}[\omega^2]$ (33)
MPS estimator penalty, $\|o - \Pi\omega\|_2$ (34)
31
32
33
34
$10^9$
$10^6$
$10^3$
$10^0$
$10^{-3}$
$10^{-6}$
0
20
40
60
80
100
Optimisation step

Fig.2

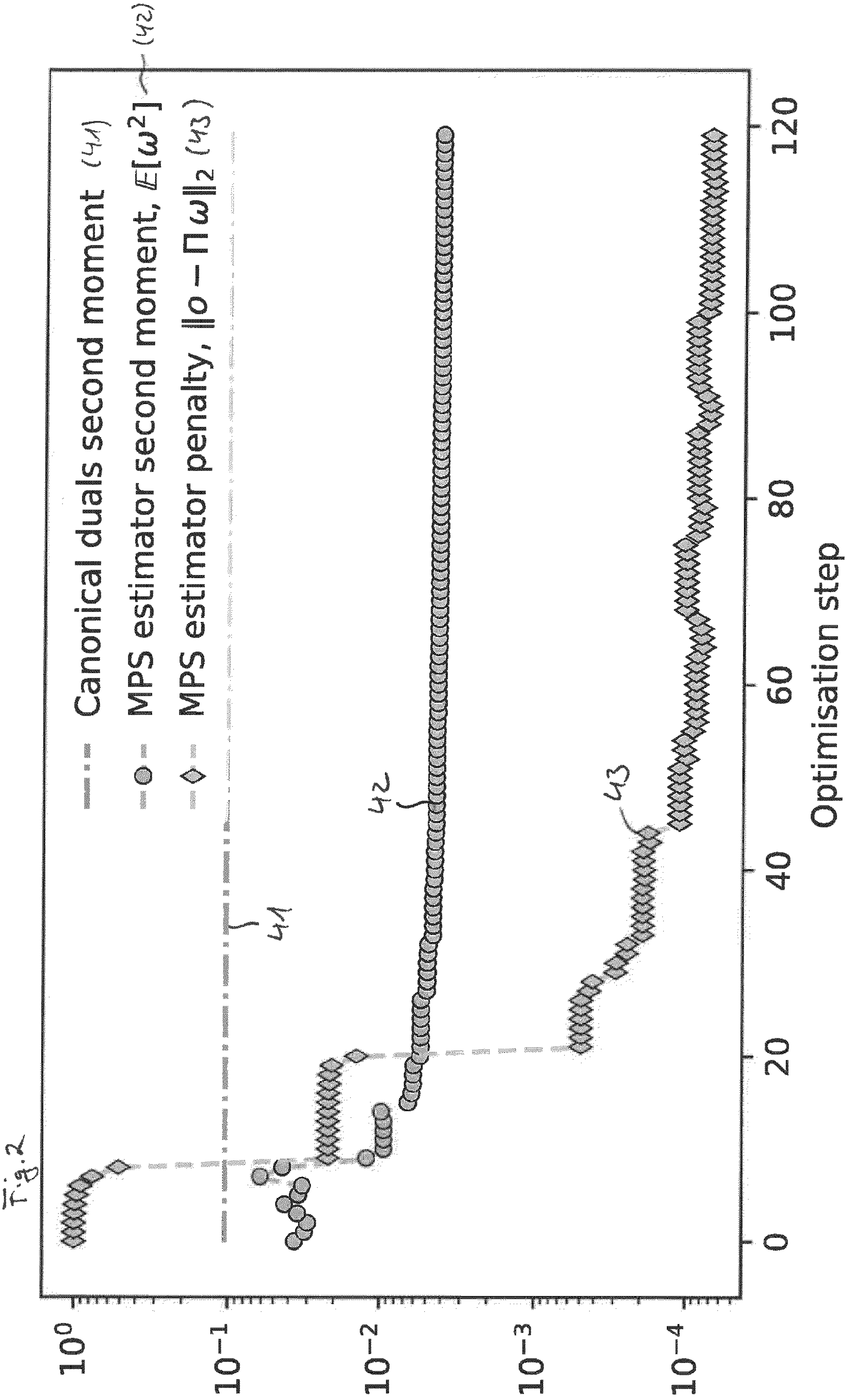
Canonical duals second moment (41)
MPS estimator second moment, $\mathbb{E}[\omega^2]$ (42)
MPS estimator penalty, $\|o - \Pi\omega\|_2$ (43)
41
42
43
$10^0$
$10^{-1}$
$10^{-2}$
$10^{-3}$
$10^{-4}$
0
20
40
60
80
100
120
Optimisation step

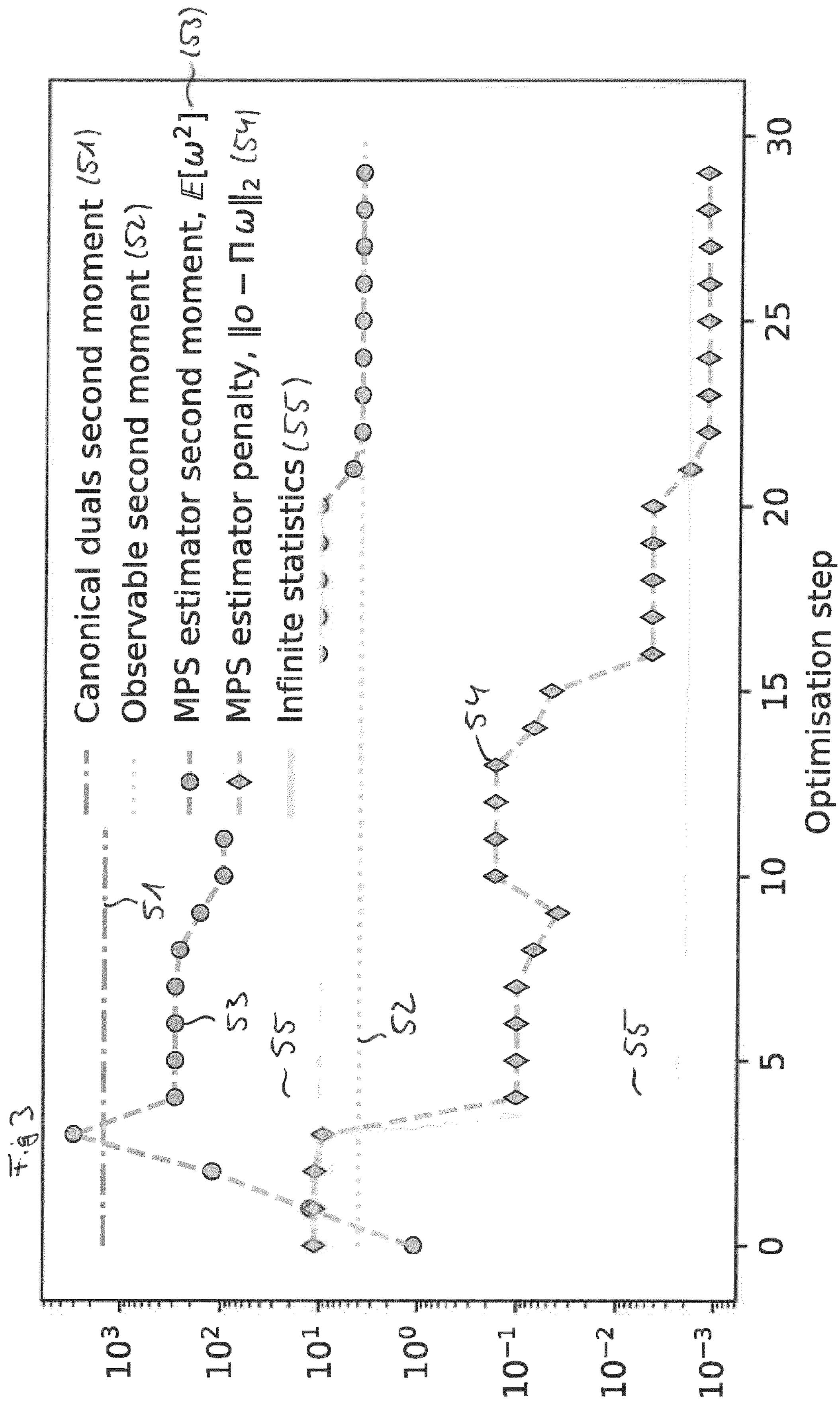
Fig 3
Canonical duals second moment (51)
Observable second moment (52)
MPS estimator second moment, $\mathbb{E}[\omega^2]$ (53)
MPS estimator penalty, $\|o - \Pi\omega\|_2$ (54)
Infinite statistics (55)
51
52
53
54
55
55
$10^3$
$10^2$
$10^1$
$10^0$
$10^{-1}$
$10^{-2}$
$10^{-3}$
0
5
10
15
20
25
30
Optimisation step

Fig. 4

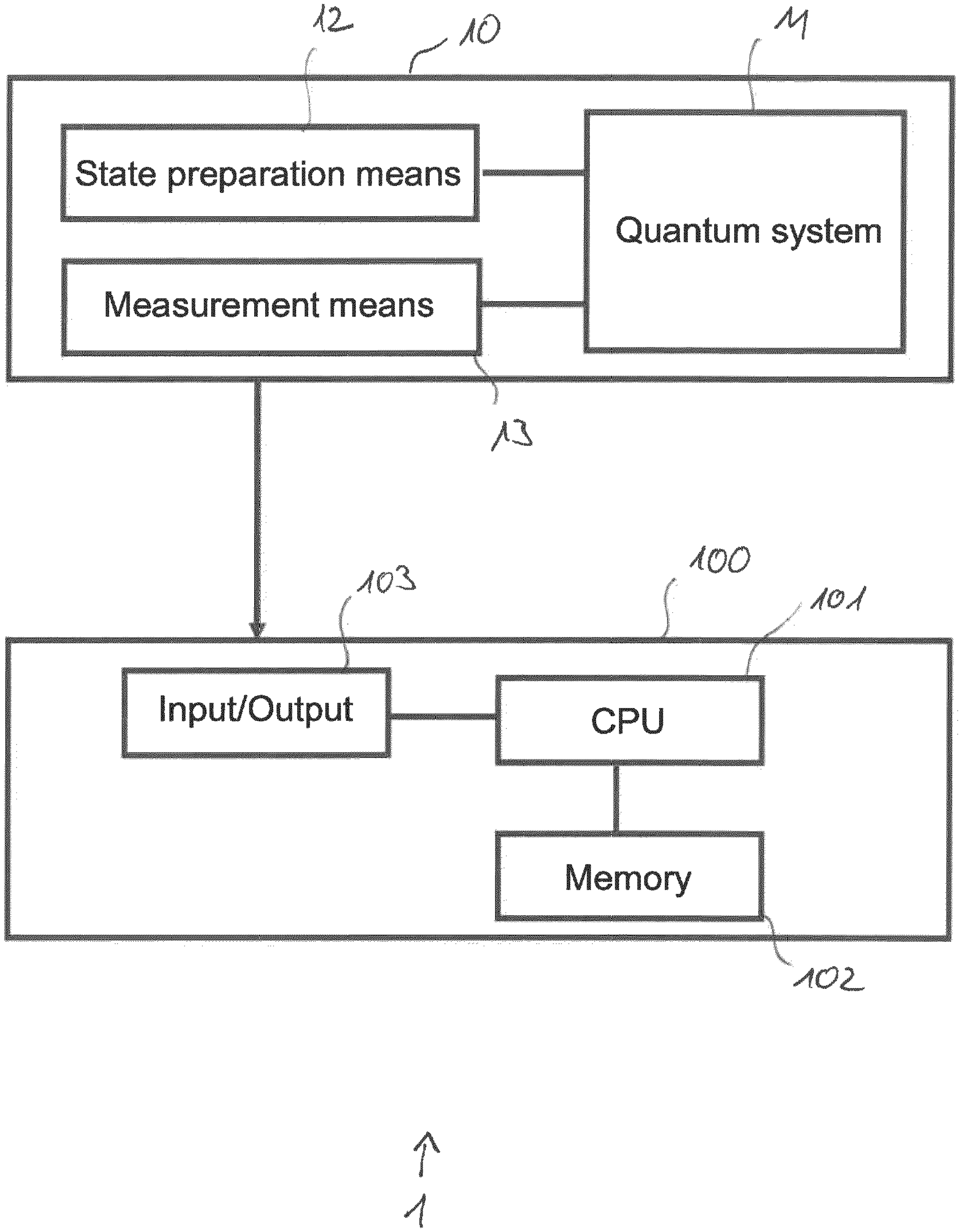
12
10
11
State preparation means
Quantum system
Measurement means
13
100
103
101
Input/Output
CPU
Memory
102
1

Fig. 5

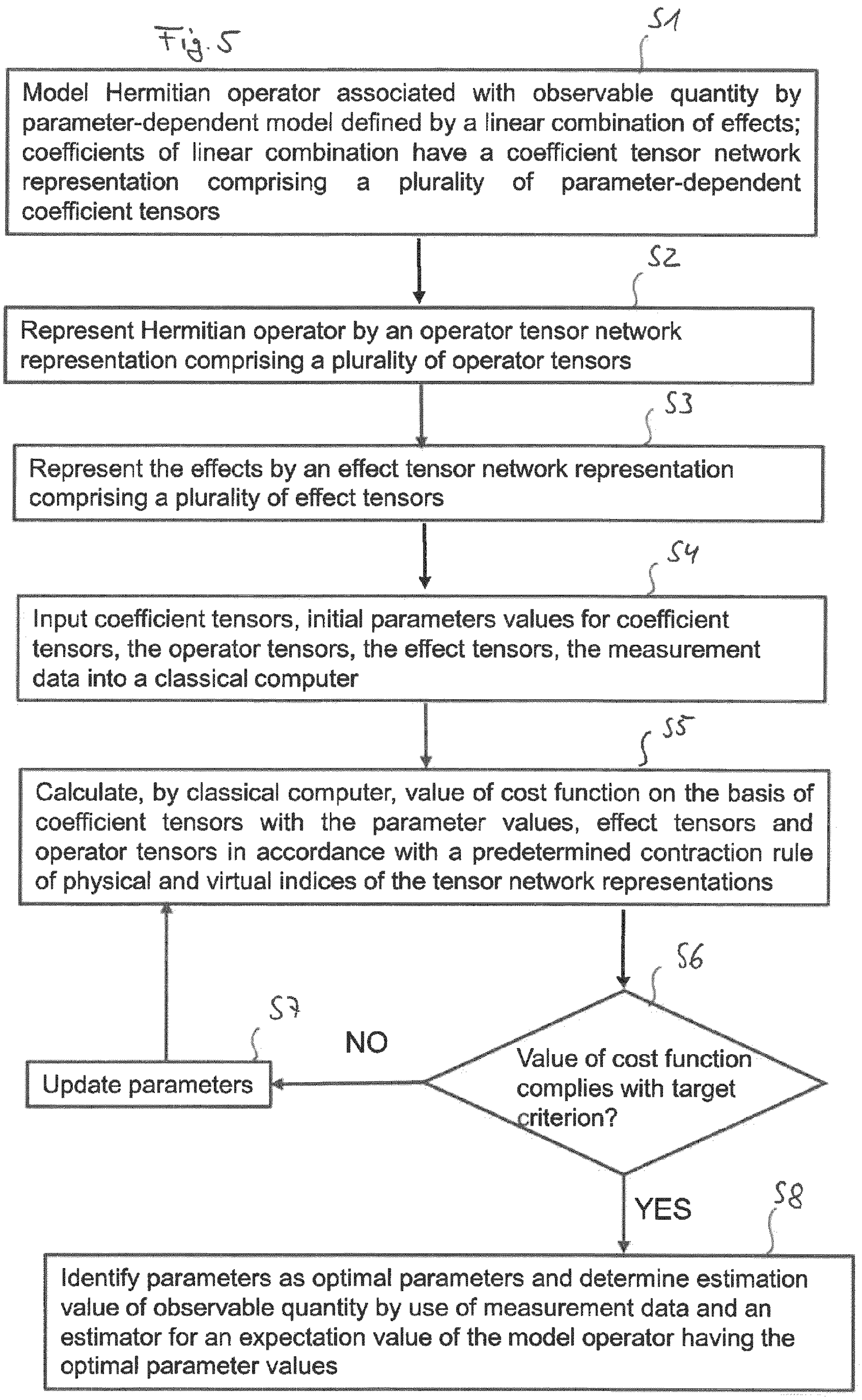
S1
Model Hermitian operator associated with observable quantity by parameter-dependent model defined by a linear combination of effects; coefficients of linear combination have a coefficient tensor network representation comprising a plurality of parameter-dependent coefficient tensors
S2
Represent Hermitian operator by an operator tensor network representation comprising a plurality of operator tensors
S3
Represent the effects by an effect tensor network representation comprising a plurality of effect tensors
S4
Input coefficient tensors, initial parameters values for coefficient tensors, the operator tensors, the effect tensors, the measurement data into a classical computer
S5
Calculate, by classical computer, value of cost function on the basis of coefficient tensors with the parameter values, effect tensors and operator tensors in accordance with a predetermined contraction rule of physical and virtual indices of the tensor network representations
S6
Value of cost function complies with target criterion?
NO
S7
Update parameters
YES
S8
Identify parameters as optimal parameters and determine estimation value of observable quantity by use of measurement data and an estimator for an expectation value of the model operator having the optimal parameter values

Europäisches Patentamt
European Patent Office
Office européen des brevets

# EUROPEAN SEARCH REPORT

Application Number
EP 24 38 2571

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | LAURIN E FISCHER ET AL: "Dual frame optimization for informationally complete quantum measurements", ARXIV.ORG, CORNELL UNIVERSITY LIBRARY, 201 OLIN LIBRARY CORNELL UNIVERSITY ITHACA, NY 14853, 31 January 2024 (2024-01-31), XP091679365, * the whole document * ----- | 1-12 | INV. G06N10/60 |
| A | SERGEI S KUZMIN ET AL: "Learning the tensor network model of a quantum state using a few single-qubit measurements", ARXIV.ORG, CORNELL UNIVERSITY LIBRARY, 201 OLIN LIBRARY CORNELL UNIVERSITY ITHACA, NY 14853, 1 September 2023 (2023-09-01), XP091603153, * Abstract, II. The tensor network model * ----- | 1-12 | |
| A,D | AHMED A AKHTAR ET AL: "Scalable and Flexible Classical Shadow Tomography with Tensor Networks", ARXIV.ORG, CORNELL UNIVERSITY LIBRARY, 201 OLIN LIBRARY CORNELL UNIVERSITY ITHACA, NY 14853, 25 May 2023 (2023-05-25), XP091517962, * Abstract, 1. Introduction, 2. Background, 3. Applications for scalable prediction * ----- -/-- | 1-12 | TECHNICAL FIELDS SEARCHED (IPC): G06N |

The present search report has been drawn up for all claims

1

| Place of search | Date of completion of the search | Examiner |
|---|---|---|
| The Hague | 12 November 2024 | Moro Pérez, Gonzalo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 24 38 2571

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | JOONAS MALMI ET AL: "Enhanced observable estimation through classical optimization of informationally over-complete measurement data -- beyond classical shadows", ARXIV.ORG, CORNELL UNIVERSITY LIBRARY, 201 OLIN LIBRARY CORNELL UNIVERSITY ITHACA, NY 14853, 31 January 2024 (2024-01-31), XP091679317, * page 1 - page 4 * ----- | 1-12 | |
| A | ZI-JIAN ZHANG ET AL: "A composite measurement scheme for efficient quantum observable estimation", ARXIV.ORG, CORNELL UNIVERSITY LIBRARY, 201 OLIN LIBRARY CORNELL UNIVERSITY ITHACA, NY 14853, 3 May 2023 (2023-05-03), XP091501432, * Abstract, I. Introduction, II. Framework, III. Optimization of CMS * ----- | 1-12 | TECHNICAL FIELDS SEARCHED (IPC) |
| A | VICTOR WEI ET AL: "Neural-Shadow Quantum State Tomography", ARXIV.ORG, CORNELL UNIVERSITY LIBRARY, 201 OLIN LIBRARY CORNELL UNIVERSITY ITHACA, NY 14853, 1 May 2023 (2023-05-01), XP091788552, DOI: 10.1103/PHYSREVRESEARCH.6.023250 * Abstract, I. Introduction, II. Methods * ----- | 1-12 | |
| T | STEFANO MANGINI ET AL: "Low-variance observable estimation with informationally-complete measurements and tensor networks", ARXIV.ORG, CORNELL UNIVERSITY LIBRARY, 201 OLIN LIBRARY CORNELL UNIVERSITY ITHACA, NY 14853, 3 July 2024 (2024-07-03), XP091807495, * the whole document * ----- | 1-12 | |

The present search report has been drawn up for all claims

1

| Place of search | Date of completion of the search | Examiner |
|---|---|---|
| The Hague | 12 November 2024 | Moro Pérez, Gonzalo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **G. M. D'ARIANO** ; **P. PERINOTTI**. Optimal data processing for quantum measurements. *Physical Review Letters*, 2007, vol. 98, 020403
- **J. MALMI**. Enhanced observable estimation through classical optimization of informationally over-complete measurement data -- beyond classical shadows. *arXiv:2401.18049*
- **L. FISCHER**. Dual frame optimization for informationally complete quantum measurements. *arXiv:2401.18071v1*
- **S. RAN et al.** Tensor Network Contractions. *Lecture Notes in Physics*, 2000, vol. 964
- **M. NIELSEN** ; **I. CHUANG**. Quantum Computation and Quantum Information. Cambridge University Press, 2010
- **S. RAN et al.** Tensor Network Contractions. *Lecture Notes in Physics*, vol. 964
- **S. SZALAY**. k-stretchability of entanglement, and the duality of K-separability and K-producibility. *Quantum*, 2019, vol. 3, 204
- **J. PRESKILL**. Quantum Computing in the NISQ era and beyond. *Quantum*, 2018, vol. 2, 79
- **P. GOKHALE** ; **O. ANGIULI** ; **Y. DING** ; **K. GUI** ; **T. TOMESH** ; **M. SUCHARA** ; **M. MARTONOSI** ; **F. T. CHONG**. Minimizing State Preparations in Variational Quantum Eigensolver by Partitioning into Commuting Families. *arXiv e-prints , arXiv:1907.13623*, 2019
- **A. JENA** ; **S. GENIN** ; **M. MOSCA**. Pauli Partitioning with Respect to Gate Sets. *arXiv e-prints , arXiv:1907.07859*, 2019
- **V. VERTELETSKYI** ; **T.-C. YEN** ; **A. F. IZMAYLOV**. Measurement optimization in the variational quantum eigensolver using a minimum clique cover. *J. Chem. Phys.*, 2020, vol. 152, 124114
- **A. ZHAO** ; **A. TRANTER** ; **W. M. KIRBY** ; **S. F. UNG** ; **A. MIYAKE** ; **P. J. LOVE**. Measurement reduction in variational quantum algorithms. *Phys. Rev.*, 2020, vol. A 101, 062322
- **O. CRAWFORD** ; **B. V. STRAATEN** ; **D. WANG** ; **T. PARKS** ; **E. CAMPBELL** ; **S. BRIERLEY**. Efficient quantum measurement of Pauli operators in the presence of finite sampling error. *Quantum*, 2021, vol. 5, 385
- **H.-Y. HUANG** ; **R. KUENG** ; **J. PRESKILL**. Predicting many properties of a quantum system from very few measurements. *Nature Physics*, 2020, vol. 16, 1050-1057
- **A. ELBEN** ; **S. T. FLAMMIA** ; **H.-Y. HUANG** ; **R. KUENG** ; **J. PRESKILL** ; **B. VERMERSCH** ; **P. ZOLLER**. The randomized measurement toolbox. *Nature Reviews Physics*, 2022, vol. 5, 9-24
- **M. PAINI** ; **A. KALEV** ; **D. PADILHA** ; **B. RUCK**. Estimating expectation values using approximate quantum states. *Quantum*, 2021, vol. 5, 413
- **G. M. D'ARIANO** ; **P. PERINOTTI**. Optimal data processing for quantum measurements. *Phys. Rev. Lett.*, 2007, vol. 98, 020403
- **L. INNOCENTI** ; **S. LORENZO** ; **I. PALMISANO** ; **F. ALBARELLI** ; **A. FERRARO** ; **M. PATERNOSTRO** ; **G. M. PALMA**. Shadow tomography on general measurement frames. *PRX Quantum*, 2023, vol. 4, 040328
- **G. M. D'ARIANO** ; **P. PERINOTTI** ; **M. F. SACCHI**. Informationally complete measurements and group representation. *Journal of Optics B: Quantum and Semiclassical Optics*, 2004, vol. 6, S487
- **S. MASSAR**. Uncertainty relations for positive-operator-valued measures. *Phys. Rev.*, 2007, vol. A 76, 0402114
- Finite Frames: Theory and Applications. Applied and Numerical Harmonic Analysis (Birkhäuser Boston, Boston. 2013
- Sparsity and spectral properties of dual frames,Linear Algebra and its Applications. **F. KRAHMER** ; **G. KUTYNIOK** ; **J. LEMVIG**. 17th Conference of the International Linear Algebra Society, Braunschweig, Germany. August 2011, vol. 439, 982
- **A. A. AKHTAR** ; **H.-Y. HU** ; **Y.-Z. YOU**. Scalable and Flexible Classical Shadow Tomography with Tensor Networks. *Quantum*, 2023, vol. 7, 1026
- **H.-Y. HU** ; **S. CHOI** ; **Y.-Z. YOU**. Classical Shadow Tomography with Locally Scrambled Quantum Dynamics. *arXiv e-prints , arXiv:2107.04817*, 2021
- **M. ARIENZO** ; **M. HEINRICH** ; **I. ROTH** ; **M. KLIESCH**. Closed-form analytic expressions for shadow estimation with brickwork circuits. *arXiv e-prints , arXiv:2211.09835*, 2022
- **C. BERTONI** ; **J. HAFERKAMP** ; **M. HINSCHE** ; **M. IOANNOU** ; **J. EISERT** ; **H. PASHAYAN**. Shallow shadows: Expectation estimation using low-depth random clifford circuits. *arXiv:2209.12924*, 2023

- **H.-Y. HU** ; **A. GU** ; **S. MAJUMDER** ; **H. REN** ; **Y. ZHANG** ; **D. S. WANG** ; **Y.-Z. YOU** ; **Z. MINEV** ; **S. F. YELIN** ; **A. SEIF**. Demonstration of Robust and Efficient Quantum Property Learning with Shallow Shadows. *arXiv e-prints , arXiv:2402.17911*, 2024
- **R. M. S. FARIAS** ; **R. D. PEDDINTI** ; **I. ROTH** ; **L. AOLITA**. Robust shallow shadows. *arXiv e-prints , arXiv:2405.06022*, 2024
- **J. MALMI** ; **K. KORHONEN** ; **D. CAVALCANTI** ; **G. GARCÍA-PÉREZ**. Enhanced observable estimation through classical optimization of informationally over-complete measurement data - beyond classical shadows. *arXiv:2401.18049*, 2024
- **L. E. FISCHER** ; **T. DAO** ; **I. TAVERNELLI** ; **F. TACCHINO**. Dual frame optimization for informationally complete quantum measurements. *arXiv:2401.18071*, 2024
- **U. SCHOLLWÖCK**. The density-matrix renormalization group in the age of matrix product states. *Annals of Physics*, January 2011, vol. 326, 96
- **Y. GUO** ; **S. YANG**. Quantum error mitigation via matrix product operators. *PRX Quantum*, 2022, vol. 3
- **K. B. PETERSEN** ; **M. S. PEDERSEN**. The Matrix Cookbook. Technical University of Denmark, 2012
- **D. C. LIU** ; **J. NOCEDAL**. On the limited memory bfgs method for large scale optimization. *Mathematical Programming*, 1989, vol. 45, 533-525
- **J. WATROUS**. The Theory of Quantum Information. Cambridge University Press, 2018
- **H. R. GRIMSLEY** ; **S. E. ECONOMOU** ; **E. BARNES** ; **N. J. MAYHALL**. An adaptive variational algorithm for exact molecular simulations on a quantum computer. *Nature Communications*, 2019, vol. 10